# EUROPEAN PATENT APPLICATION

(11) **EP 3 502 829 A1**
(43) Date of publication of application: **26.06.2019**
(21) Application number: 18215574.7
(22) Date of filing: 21.12.2018
(51) Int. Cl.: G06F 1/16, G06F 3/0488, G06F 3/01, G06F 3/14

(54) **METHOD FOR PROVIDING USER INTERFACE USING PLURALITY OF DISPLAYS AND ELECTRONIC DEVICE USING THE SAME**

(30) Priority: 22.12.2017 KR 20170178813
(71) Applicant: Samsung Electronics Co., Ltd., Suwon-si, Gyeonggi-do, 16677 (KR)
(72) Inventor: You, Juyeon, 16677 Suwon-si (KR); Lim, Yongjun, 16677 Suwon-si (KR); Kim, Kyusung, 16677 Suwon-si (KR); Kim, Sungkwon, 16677 Suwon-si (KR); Bae, Soojung, 16677 Suwon-si (KR); Lee, Sungwook, 16677 Suwon-si (KR); Choi, Yeonee, 16677 Suwon-si (KR); Choi, Jinyoung, 16677 Suwon-si (KR); Kang, Donghee, 16677 Suwon-si (KR)
(74) Representative: Nederlandsch Octrooibureau

(57) **Abstract**

An electronic device includes at least one processor, a first display and a second display that are connected to the at least one processor, and a memory that is connected to the at least one processor and stores instructions and a plurality of applications including a first application and a second application. The instructions, when executed, cause the processor to obtain first information through the second display while executing the first application through the first display, and to display a first item being at least a part of a plurality of items associated with the first application in the second display, in response to obtaining the first information.

## Description

### BACKGROUND

### 1. Field

The present disclosure relates to a technology for providing a user interface.

### 2. Description of Related Art

Nowadays, there is being developed a technology which allows a user to control an electronic device even in various situations, by allowing the electronic device to interwork with an external device or classifying and distributing an input device capable of controlling the electronic device into several parts. For example, an operation of the electronic device may be controlled through a display in addition to a main display, by variously placing displays equipped with touch input functions.

Placing multiple displays can be useful in various situations, in which the user and the main display are distant from each other and thus it is difficult for the user to control the electronic device through the main display, such as a situation in which the user drives.

The above information is presented as background information only to assist with an understanding of the present disclosure. No determination has been made, and no assertion is made, as to whether any of the above might be applicable as prior art with regard to the present disclosure.

### SUMMARY

Certain embodiments according to the present disclosure implement a user interface which allows a user to conveniently control operation of an electronic device through various displays. For example, a user interface according to some embodiments of this disclosure allows a user to control the electronic device without passing through the main display, informs the user of various situations through a display close to the user, or enables a user to control the electronic device without directly watching a device.

In certain embodiments according to the present disclosure, an electronic device may include at least one processor, a first display and a second display that are connected to the at least one processor, and a memory that is connected to the at least one processor and stores instructions and a plurality of applications including a first application and a second application. The instructions, when executed, may cause the processor to obtain first information through the second display while executing the first application through the first display, and to display a first item being at least a part of a plurality of items associated with the first application in the second display, in response to obtaining the first information.

In accordance with another aspect of the present disclosure, an electronic device may include at least one processor, a display is connected to the at least one processor, a communication circuit that is connected to the at least one processor and transmits or receives a signal to or from an external device, and a memory that is connected to the at least one processor and stores instructions. The instructions, when executed, may cause the processor to obtain a user input through the display, to transmit information about the user input to the external device, and to display a screen including at least one item associated with an application being executed at the external device in the display, in response to the information about the user input.

According to some embodiments of the present disclosure, an operation of an electronic device may be controlled conveniently without passing through a main display.

According to various embodiments of the present disclosure, a user may sensibly check a situation occurring at an electronic device without directly watching the electronic device.

Besides, a variety of effects directly or indirectly understood through this disclosure may be provided.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. Anon-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates an environment in which an electronic device according to certain embodiments operates;
FIG. 2 illustrates an electronic device performing operations according to various embodiments of the present disclosure;
FIG. 3 illustrates an electronic device performing operations according to various embodiments of the present disclosure;
FIG. 4 illustrates operations of a first electronic device according to various embodiments;
FIG. 5 illustrates operations of a second electronic device according to some embodiments;
FIG. 6 illustrates operations of a second electronic device according to certain embodiments;
FIG. 7 is a flowchart illustrating an operation between a first electronic device and a second electronic device according to various embodiments;
FIG. 8 is a flowchart illustrating an operation between a first electronic device and a second electronic device according to some embodiments;
FIG. 9 illustrates, in flowchart form, operations between a first electronic device and a second electronic device according to certain embodiments;
FIG. 10 illustrates, in flowchart form, operations between a first electronic device and a second electronic device according to various embodiments;
FIG. 11 illustrates, in flowchart form, between a first electronic device and a second electronic device according to some embodiments;
FIG. 12 illustrates, in flowchart form, operations between a first electronic device and a second electronic device according to certain embodiments;
FIG. 13 illustrates examples of user interfaces (UIs) according to various embodiments;
FIG. 14 illustrates an example of vibratory feedback and a system action corresponding to a user input in a system environment in which a plurality of displays are included, according to some embodiments;
FIG. 15 illustrates an example of vibratory feedback and a system action corresponding to a user input in a system environment in which a plurality of displays are included, according to certain embodiments;
FIG. 16 illustrates an interaction in a first display and a second display based on a user input, according to various embodiments;
FIG. 17 illustrates an interaction in a first display and a second display based on a user input, according to some embodiments;
FIG. 18 illustrates an example of vibratory feedback which an electronic device according to certain embodiments provides in consideration of a priority;
FIG. 19 illustrates situation-based vibratory feedback according to various embodiments;
FIG. 20A illustrates a display according to various embodiments;
FIG. 20B illustrates an input acquisition guide of a user and vibratory feedback interaction according to some embodiments;
FIG. 20C illustrates an example of an input acquisition guide of a user and vibratory feedback interaction according to certain embodiments; and
FIG. 21 illustrates, in block diagram format, an electronic device in a network environment, according to various embodiments.

### DETAILED DESCRIPTION

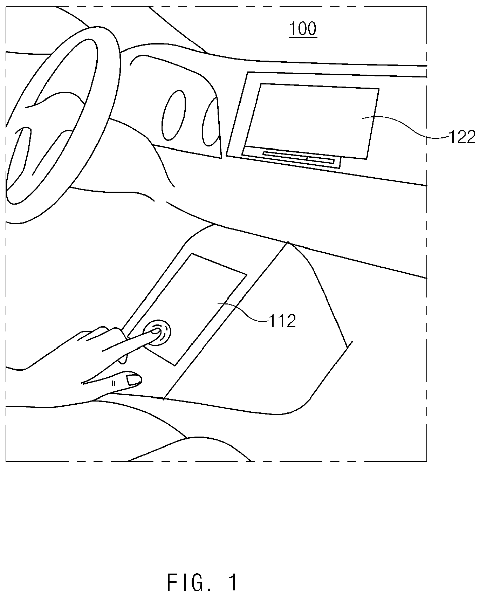

FIGS. 1 through 21, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, various embodiments of the present disclosure will be described with reference to accompanying drawings. However, those of ordinary skill in the art will recognize that modification, equivalent, and/or alternative on various embodiments described herein can be variously made without departing from the scope and spirit of the present disclosure.

FIG. 1 illustrates an environment in which an electronic device according to various embodiments operates.

Referring to the non-limiting example of FIG. 1, an electronic device 100 according to various embodiments of the present disclosure may include a plurality of input devices 112 and 122. According to some embodiments, the electronic device 100 may be a vehicle. A user may execute an application through the plurality of input devices 112 and 122 provided in the vehicle even while driving and may control various operations associated with the application.

According to certain embodiments, the first input device 112 and/or the second input device 122 may be a touchscreen display which makes a touch input of the user possible. The first input device 112 and/or the second input device 122 may display a user input received through any one input device or a notification for a situation which happens in an electronic device. The user may check various situations through the first input device 112 and/or the second input device 122.

In various embodiments, the first input device 112 which is a main display may be referred to as a "first display", and the second input device 122 which is an auxiliary display may be referred to as a "second display". An electronic device may control various operations which are performed at the electronic device through the second input device 122, and may display a result of an operation performed by the second input device 122 through the first input device 112.

According to various embodiments, the first input device 112 and/or the second input device 122 may be included in one electronic device or may be included in different electronic devices. According to some embodiments, the first input device 112 and/or the second input device 122 may be connected to processors implemented in the form of one integrated chip or may be connected to processors implemented with a separate chip.

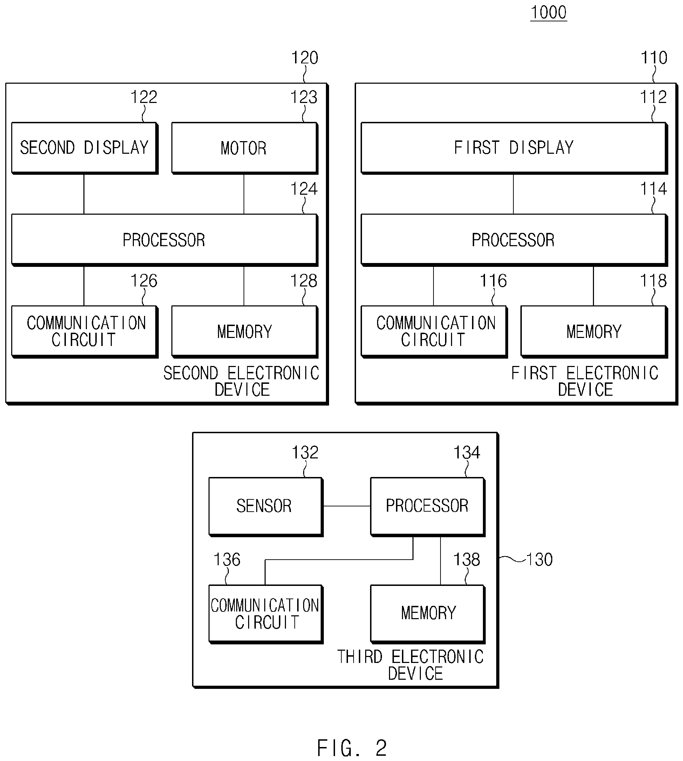

FIG. 2 illustrates an electronic device performing operations according to various embodiments of the present disclosure.

Referring to the non-limiting example of FIG. 2, a system 1000 equipped with a plurality of displays may include a plurality of electronic devices 110, 120, and 130. According to certain embodiments, the system 1000 may comprise part or all of electronic device 100 of FIG. 1. For example, the system 1000 may be a vehicle driving system, and the electronic device 100 may be a vehicle. The configuration illustrated in FIG. 2 is an illustrative example, and each device may be variously changed or modified according to various embodiments of the present disclosure.

According to various embodiments, the system 1000 which includes a plurality of displays may include at least one of the first electronic device 110 including the first display 112, the second electronic device 120 including the second display 122, or the third electronic device 130 providing various state information about the user.

According to some embodiments, the first electronic device 110 may include at least one of the first display 112, a processor 114, a communication circuit 116, and a memory 118. According to certain embodiments, the first electronic device 110 may execute an application through the components, based on information about the user (e.g., input information of the user or information about a state of the user), the first electronic device 110 and may display various user interfaces on the first display 112, or may allow the various user interface to be displayed on the second display 122 of the second electronic device 120. The first electronic device 110 may execute an operation associated with information obtained through the second display 122 of the second electronic device 120.

According to various embodiments, the first display 112 may be a main display. The first display 112 may display various operations of the first electronic device 110 and may operate as an input device. For example, the first display 112 may be a touchscreen display which makes a touch input of the user possible. In addition, the first display 112 may obtain an input through various components (e.g., a pen).

According to some embodiments, the processor 114 may be electrically connected to various components included in the first electronic device 110 and may control any other components according to various embodiments of the present disclosure. The processor 114 may perform (or execute) operations according to various embodiments of the present disclosure. According to certain embodiments, the processor 114 may control information (or control information) for controlling any other components included in the second electronic device 120.

According to various embodiments, the communication circuit 116 may be electrically connected to the processor 114, and may transmit and/or receive a signal to and/or from an external device (e.g., the second electronic device 120 or the third electronic device 130). According to some embodiments, the communication circuit 116 may support wired or wireless communications. The communication circuit 116 may provide long distance communication or short distance communication. The communication circuit 116 may include a component such as a communication bus.

According to certain embodiments, the memory 118 may store instructions which cause the processor 114 to perform various embodiments of the present disclosure. In addition, the memory 118 may include information according to various embodiments of the present disclosure. For example, the memory 118 may include various information, such as a correlation between an application and an UI, a correlation between state information about the user and an UI, and priority information.

According to various embodiments, the second electronic device 120 may include at least one of the second display 122, a motor 123, a processor 124, a communication circuit 126, or a memory 128. According to some embodiments, the second electronic device 120 may display an UI associated with an application or a state of a user on the second display 122, may provide a vibration associated with the UI through the second display, or may transmit information obtained through the UI to the first electronic device 110.

According to certain embodiments, the second display 122 may be a main display. The second display 122 may display various operations of the second electronic device 120 and may operate as an input device. For example, the second display 122 may be a touchscreen display which makes a touch input of the user possible. In addition, the second display 122 may obtain an input through various components (e.g., a pen).

According to various embodiments, the processor 124 may be electrically connected to any other components included in the second electronic device 120 and may control any other components according to various embodiments of the present disclosure. The processor 124 may be electrically connected to, for example, the second display 122, the motor 123, the communication circuit 126, and/or the memory 128. The processor 124 may perform (or execute) operations according to various embodiments of the present disclosure. According to some embodiments, the processor 124 may generate a command or control information for controlling any other components included in the first electronic device 110.

According to certain embodiments, the communication circuit 126 may be electrically connected to the processor 124, and may transmit and/or receive a signal to and/or from an external device (e.g., the first electronic device 110 or the third electronic device 130). According to various embodiments, the communication circuit 126 may provide wired or wireless communication. The communication circuit 126 may provide long distance communication or short distance communication. The communication circuit 126 may include a component such as a communication bus.

According to some embodiments, the memory 128 may store instructions which cause the processor 124 to perform various embodiments of the present disclosure. In addition, the memory 128 may include information according to various embodiments of the present disclosure. For example, the memory 128 may include various information, such as a correlation between an application and an UI, a correlation between state information about the user and an UI, priority information, and a relationship between an UI and/or input information of the user and a vibration.

According to certain embodiments, the motor 123 may provide a vibration having a specified intensity and/or a specified pattern. The motor 123 may provide the vibration under control of the processor 124. For example, the motor 123 may be a haptic module.

According to various embodiments, the third electronic device 130 may include at least one of a sensor 132, a processor 134, a communication circuit 136, or a memory 138. The third electronic device 130 may obtain state information about the user through the sensor 132 or the communication circuit 136.

According to some embodiments, the sensor 132 and/or the communication circuit 136 may obtain state information about the user. For example, the third electronic device 130 may obtain biometric information of the user through the sensor 132, and may obtain state information such as whether the user is drowsy. The third electronic device 130 may obtain information (e.g., driving environment information such as driving information, a load state, or the like) about a state, in which the user is at the system 1000 including the plurality of displays, through the sensor 132. The third electronic device 130 may obtain the state information through the communication circuit 136. Alternatively, the third electronic device 130 may obtain information regarding a state associated with receiving or sending a message or information regarding a state associated with a call from the outside of the system 1000.

According to certain embodiments, the processor 134 may be electrically connected to any other components included in the second electronic device 120 and may control any other components according to various embodiments of the present disclosure. The processor 134 may be electrically connected to, for example, the sensor 132, the communication circuit 136, and/or the memory 138. The processor 134 may perform (or execute) operations according to various embodiments of the present disclosure. According to various embodiments, the processor 134 may generate a command or control information for controlling any other components included in the first electronic device 110.

According to some embodiments, the communication circuit 136 may be electrically connected to the processor 134, and may transmit and/or receive a signal to and/or from an external device (e.g., the first electronic device 110 or the second electronic device 120). According to certain embodiments, the communication circuit 136 may provide wired or wireless communication. The communication circuit 136 may provide long distance communication or short distance communication. The communication circuit 136 may include a component such as a communication bus. The communication provided by the communication circuit 136 may implement communication protocols, such as vehicle to everything (V2X) in a vehicle.

According to various embodiments, the memory 138 may store instructions which cause the processor 134 to perform operations implementing various embodiments of the present disclosure. In addition, the memory 138 may include information according to various embodiments of the present disclosure. For example, the memory 138 may include a correlation between user biometric information and a user state.

In various embodiments, components of the electronic devices 110, 120, and 130 may be variously changed or modified. For example, the sensor 132 of the third electronic device 130 may be included in the first electronic device 110, or a part of operations of the processor 134 of the third electronic device 130 may be performed at the first electronic device 110.

In various embodiments, at least one of the electronic devices 110, 120, and 130 may correspond to one chip. For example, components connected to the first electronic device 110 may be implemented on one chip.

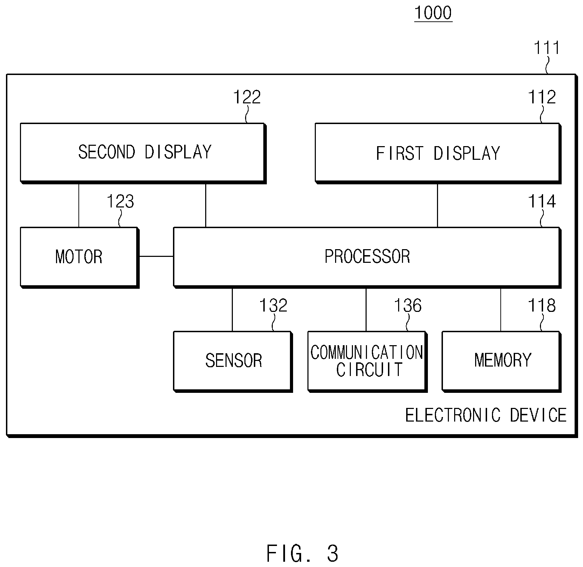

FIG. 3 illustrates an electronic device performing operations according to various embodiments of the present disclosure.

Referring to the non-limiting example of FIG. 3, the system 1000 equipped with a plurality of displays may be implemented with one electronic device 111. The electronic device 111 may be a vehicle.

According to some embodiments, the plurality of displays 112 and 122 may be connected to one chip and may be included in the one electronic device 111. Alternatively, the plurality of displays 112 and 122 may be connected to a plurality of chips and may be included in the one electronic device 111.

At least some of components illustrated in FIG. 3 may be identical or similar to components having the same or similar reference numerals in this disclosure. For example, the first display 112, the second display 122, the motor 123, and the sensor 132 may be identical or similar to the first display 112, the second display 122, the motor 123, and the sensor 132 of FIG. 2. According to certain embodiments, the at least one processor 114 may perform the operations described with reference to the processors 114, 124, and 134 of FIG. 2. According to various embodiments, the communication circuit 136 may perform a role of a bus transferring information between components, in addition to an operation which is performed at the communication circuit 136 of FIG. 2. The memory 118 may be identical or similar to the memories 118, 128, and 138 of FIG. 2.

Below, various operations will be described with reference to the system 1000 of FIG. 2 as an illustrative example, but various operations to be described below may be performed at the electronic device 111 of FIG. 2.

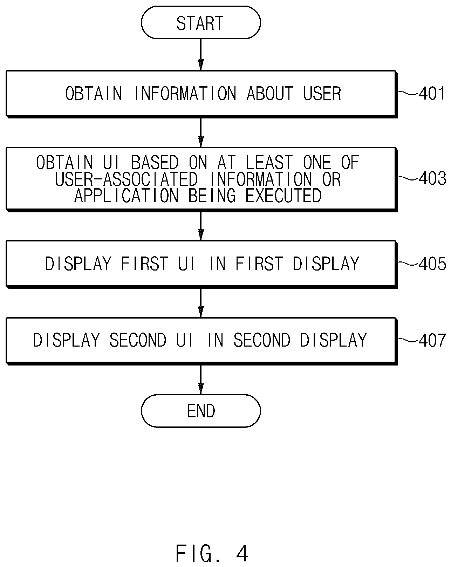

FIG. 4 illustrates an operation of a first electronic device according to some embodiments.

The following operation may be executed (or performed) at a first electronic device (e.g., the first electronic device 110 of FIG. 2). An operation of the first electronic device may also be understood as being executed by a processor (e.g., the processor 114 of FIG. 2).

Referring to the non-limiting example of FIG. 4, in operation 401, the first electronic device may obtain information associated with a user. The user-associated information may be obtained from an external device (e.g., the second electronic device 120 of FIG. 2 or the third electronic device 130 of FIG. 2). According to certain embodiments, the user-associated information may include input information obtained from the user through the external device or information about a state of the user.

In operation 403, the first electronic device may obtain an UI based on at least one of an application being executed or the user-associated information. The first electronic device may also obtain a type of the UI. To this end, a correlation between the application being executed and/or the user-associated information and the UI may be stored in advance in the first electronic device. According to various embodiments, upon determining the UI, the first electronic device may consider a preset priority depending on the type of the user-associated information.

In operation 405, the first electronic device may display a first UI in the first display. The first electronic device may display the first UI associated with the type of the first UI. The first electronic device may display the first UI on the application being executed.

In operation 407, the second electronic device may cause a second display to display a second UI. To this end, the first electronic device may transmit information about the first UI to the second electronic device. For example, the first electronic device may transmit a type of the determined UI or information of the first UI to the second electronic device. The first UI may be associated with the second UI.

Operations 401 to 407 may be performed by the electronic device 111 shown in FIG. 3. In this case, the electronic device 111 of FIG. 3 may determine the first UI to be displayed in the first display and the second UI to be displayed in the second display and may display the first UI and the second UI in the first display and the second display, respectively.

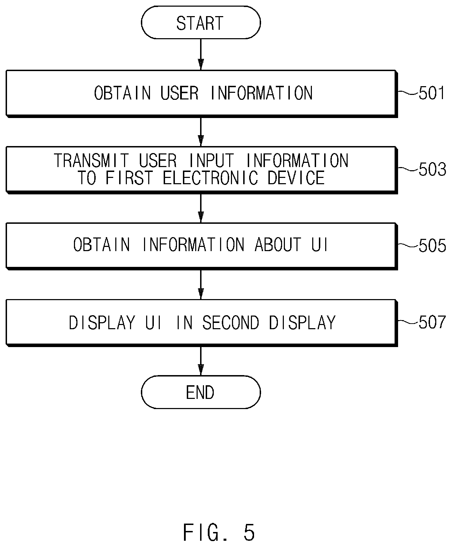

FIG. 5 illustrates operations of a second electronic device according to some embodiments.

Referring to the the non-limiting example of FIG. 5, the illustrated operations may be executed (or performed) at a second electronic device (e.g., the second electronic device 120 of FIG. 2). An operation of the second electronic device may also be understood as being executed by a processor (e.g., the processor 124 of FIG. 2).

In operation 501, the second electronic device may obtain a user input. For example, the second electronic device may obtain a touch input of a user through a second display (e.g., the second display 122 of FIG. 2).

In operation 503, the second electronic device may transmit user input information to a first electronic device in response to obtaining the input. The user input information may be information indicating an input of the user.

In operation 505, the second electronic device may obtain information associated with an UI. The UI-associated information may be an UI type or UI information. The second electronic device may obtain the UI type or the UI information provided from the first electronic device in response to the transmission of the user input information.

According to certain embodiments, the UI may be determined at the first electronic device based on user-associated information. For example, the UI may be an UI which is determined based on at least one of the user input information or an application being executed at the first electronic device. In some cases, the UI may be determined based on state information about the user regardless of the user input or the application. For example, in the case of recognizing an emergency situation at the first electronic device, in some cases, the UI may be determined based on the state information about the user.

In operation 507, the second electronic device may display an UI in the second display. The second electronic device may display an UI depending on the information about the UI obtained in operation 505 in the second display. The UI may be an UI which is set in advance to be suitable for the second display.

According to various embodiments, the second electronic device may provide a vibration through the second display. The second electronic device may provide a vibration based on the UI obtained from the first electronic device or information provided independently of the UI. For example, in the case where information about an UI determined based on information about a state of the user is transmitted from the first electronic device, the second electronic device may provide a vibration corresponding to the UI-associated information to the first electronic device.

Operations 501 to 507 may, in certain embodiments, be performed by electronic device 111 of FIG. 3. In this case, the electronic device 111 of FIG. 3 may determine a first UI to be displayed in the first display and a second UI to be displayed in the second display and may display the first UI and the second UI in the first display and the second display, respectively.

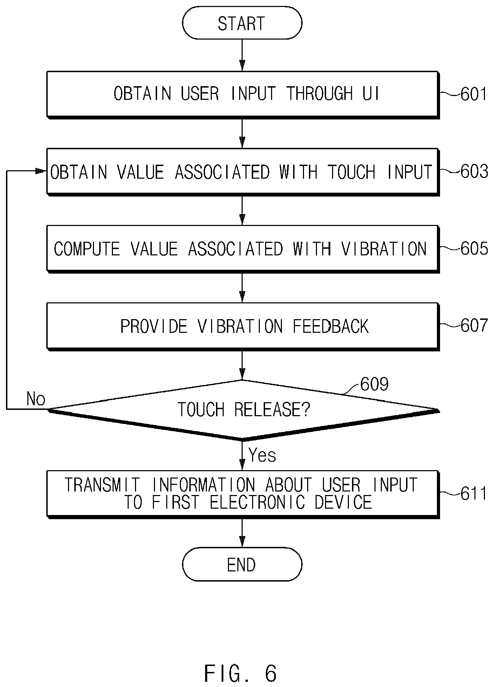

FIG. 6 illustrates operations of a second electronic device according to some embodiments.

Referring to the non-limiting example of FIG. 6, the illustrated operations may be executed (or performed) at a second electronic device (e.g., the second electronic device 120 of FIG. 2). An operation of the second electronic device may also be understood as being executed by a processor (e.g., the processor 124 of FIG. 2).

Operation 601 may be performed after operation 507 of FIG. 5. When an operation of FIG. 6 is performed, an UI may be already displayed in the second display depending on FIG. 5.

Referring to the non-limiting example of FIG. 6, the second electronic device may provide vibratory feedback to allow the user to provide a desired input without watching the second electronic device, and may transmit a command corresponding to the user input to the first electronic device.

In operation 601, the second electronic device may obtain a user input through the UI. The user input may be, for example, a touch input through the second display. Below, the user input may be referred to as a "touch input".

In operation 603, the second electronic device may obtain a value associated with the touch input. The second electronic device may calculate (or compute) the value associated with the touch input based on an object, a location, an intensity, a moving distance, and/or a moving direction of the touch input.

In operation 605, the second electronic device may obtain a value associated with a vibration. The second electronic device may obtain the vibration-associated value based on at least one of the value associated with the touch input or the UI. The vibration-associated value may include a vibration pattern and/or a vibration intensity.

In operation 607, the second electronic device may obtain vibratory feedback. The second electronic device may provide a vibration by using a motor (e.g., the motor 123 of FIG. 2), through the second display.

In operation 609, the second electronic device may determine whether a touch release occurs. The second electronic device may monitor whether a touch release occurs, through the second display, and may perform operation 611 when a touch release occurs. In the case where a touch release does not occur, the second electronic device may repeat operation 603 to operation 609. For example, the second electronic device may provide a value associated with a touch input, a value associated with a vibration, vibratory feedback during a first time interval from when the user input is obtained to when a touch release occurs. The vibration feedback may vary with a change of the user input within the first time interval.

In the case where a touch release occurs, in operation 611, the second electronic device may transmit information about the user input to the first electronic device. The second electronic device may determine the user input corresponding to the touch release as the intension of the user and may transmit the information about the user input to the first electronic device.

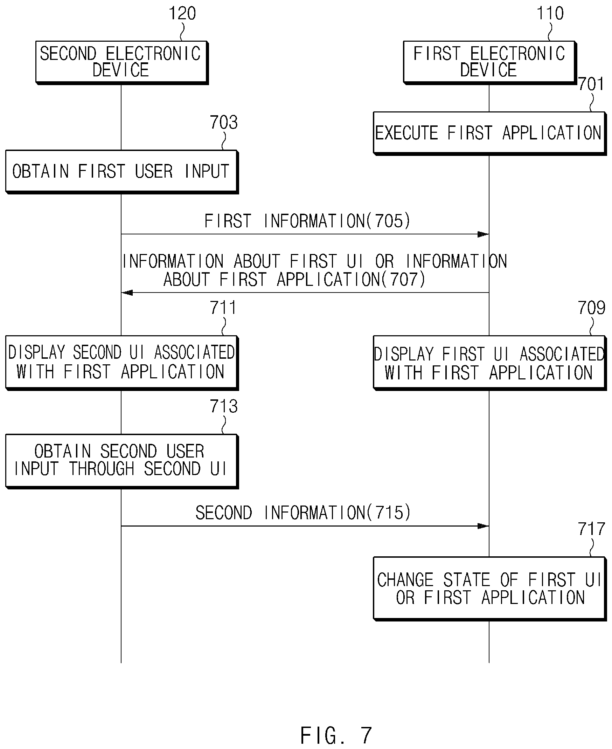

FIG. 7 illustrates, in flowchart format, operations between a first electronic device and a second electronic device according to certain embodiments.

Referring to the non-limiting example of FIG. 7, in the case where a user input occurs at the second electronic device 120 while executing a first application at the first electronic device 110, an UI associated with the first application may be displayed at the second electronic device 120. The first electronic device 110 may be the first electronic device 110 ofFIG. 2, and the second electronic device 120 may be the second electronic device 120 of FIG. 2. In the illustrative example of FIG. 7, operations of the first electronic device 110 and/or operations of the second electronic device 120 may be understood as being executed by a processor (e.g., the processor 114 of FIG. 2 or the processor 124 of FIG. 2).

In operation 701, the first electronic device 110 may execute the first application. In the following operation, the first electronic device 110 may be in an application-executed state. The first electronic device 110 may display the first application in the display 112 of the first electronic device 110. To display the first application may mean displaying a screen including an item associated with the first application or displaying an UI associated with the first application.

In operation 703, the second electronic device 120 may obtain a first user input. The second electronic device 120 may obtain the first user input through a second display (e.g., the second display 122 of FIG. 2). The first user input may be, for example, a touch input.

In operation 705, the second electronic device 120 may transmit first information to the first electronic device 110 in response to the first user input. The first information which is information providing notification that the first user input is obtained may be information about the first user input.

In operation 707, the first electronic device 110 may transmit information about the first UI or information about the first application to the second electronic device 120. The first electronic device 110 may determine the first UI associated with the first application in response to the first information. The first electronic device 110 may transmit the information about the first UI or the information about the first application to the second electronic device 120.

In operation 709, the first electronic device 110 may display the first UI associated with the first application on the first display. The first electronic device 110 may display the first UI on the first application in response to obtaining the first information. To display the first UI may be understood as displaying a first screen including at least a part of first items associated with the first application in the first display 112. The first UI may be a control UI which allows the user to control the first application.

In operation 711, the second electronic device 120 may display the second UI associated with the first application in the second display in response to obtaining the information in operation 707. According to various embodiments, displaying the second UI comprises displaying a second screen including an item including at least a part of second items associated with the first application in the second display. The second UI may be associated with the first UI. At least a part of the second items may operatively or functionally correlate with or correspond to at least a part of the first items.

The second electronic device 120 may determine the second UI based on the first information about the first UI or information about the first application. To this end, a correlation between the first UI and the second UI or a correlation between the first application and the second UI may be stored in advance in the second electronic device 120. The information about the first UI may directly indicate the second UI. For example, the first electronic device 110 may determine the second UI to be displayed at the second electronic device 120, and may inform the second electronic device 120 of the second UI through the information about the first information.

The second UI may be a control UI for controlling the first application or an operation of the first electronic device 110. The second UI may provide the user with a guide for the control.

According to various embodiments, at least a part of the second items may be displayed at a location on the second display, which corresponds to a location where the first user input occurs. For example, when the first user input occurs within a first area of the second display, at least a part of the second items may be placed within the first area or may be positioned adjacent to the first area.

In operation 713, the second electronic device 120 may obtain a user input through the second UI. For example, the second electronic device 120 may obtain the second user input through a third item, the third item being at least a part of items included in the second screen. Operation 711 and operation 713 may be performed at the same time, or any one of operation 711 and operation 713 may be first performed.

In operation 715, the second electronic device 120 may transmit second information to the first electronic device 110 in response to the second user input. The second information may be information about the second user input. Alternatively, the second information may include a command corresponding to the second user input.

According to some embodiments, when the second information is obtained through the third item, the second information may be associated with the third item. For example, in the case where the third item is an item indicating "volume up", the second information may be control information instructing an increase in a volume.

In operation 715, the first electronic device 110 may change a state of the first UI or a state of the first application in response to the second information. For example, the first electronic device 110 may display the changed information in the first UI or on the first application. When the second information is the control information instructing "volume up", in response to the second information, the first electronic device 110 may increase a volume of the first application, may change a state of an item associated with the volume of the first application, or may change a state of an item associated with a volume in the first UI.

The second electronic device 120 may change a state of the second UI in response to the second user input. For example, the second electronic device 120 may change a location of at least a portion of the third item in response to the second user input.

The operations described with reference to FIG. 7 may, in some embodiments, be performed at the electronic device 111 of FIG. 3. In this case, the respective operations may be performed at a processor (e.g., the processor 114 of FIG. 3). For example, an operation of transmitting information between the first electronic device 110 and the second electronic device 120 may be understood as an information transfer between processors or may be understood as an operation of generating information in one processor.

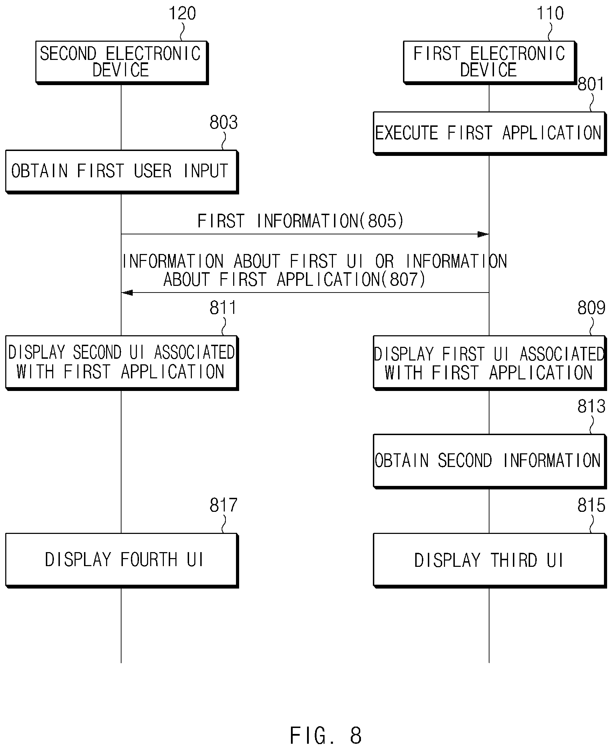

FIG. 8 illustrates, in flowchart format, operations between a first electronic device and a second electronic device according to certain embodiments.

Referring to the non-limiting example of FIG. 8, in operation 810, a plurality of UIs may be associated with an application stored in the first electronic device 110. For example, when a user input or information about a user is obtained during the execution of the first application by the first electronic device 110, an UI may be determined according to a type of the user input or a type of the information about the user. In this case, various UIs may be displayed in a first display (e.g., the first display 112 of FIG. 2) while the first application is executed. Likewise, various UIs may be displayed in a second display (e.g., the second display 122 of FIG. 2) while the first application is executed at the first electronic device 110.

The first electronic device 110 may be the first electronic device 110 of FIG. 2, and the second electronic device 120 may be the second electronic device 120 of FIG. 2. According to various embodiments, operations of the first electronic device 110 and/or an operation of the second electronic device 120 may be understood as being executed by a processor (e.g., the processor 114 of FIG. 2 or the processor 124 of FIG. 2).

Operations 801 to 811 illustrated in FIG. 8 may, in various embodiments according to this disclosure, be identical or similar to operations 701 to 711 in FIG. 7.

In operation 813, while the first application is executed or while the first UI is displayed in the first display 112, the first electronic device 110 may obtain the second information. The second information may include information about the user input or state information about the user obtained through the second electronic device 120. According to various embodiments, the second information may be obtained at the first electronic device 110, or may be information which is transmitted to the first electronic device 110 after being obtained at the second electronic device 120.

In operation 815, the first electronic device 110 may display a third UI in the first display in response to obtaining the second information. The third UI may be an UI which is associated with the first application and is determined based on the second information. The third UI may include a third screen including a fourth item being at least a part of the first items associated with the first application. The first electronic device 110 may display the third UI in the first display.

In operation 817, the second electronic device 120 may display a fourth UI in the second display. The fourth UI may be an UI which is associated with the first application and is determined based on the second information.

According to some embodiments, the first electronic device 110 may transmit information about the third UI to the second electronic device 120, and the second electronic device 120 may display the fourth UI in the second display based on the third UI. In this case, the information about the third UI may directly indicate the fourth UI. The third UI and the fourth UI may be associated with each other.

According to certain embodiments, the first electronic device 110 may provide the information about the first application and/or the second information to the second electronic device 120, and the second electronic device 120 may determine the fourth UI.

The fourth UI may include a fourth screen including a fifth item being at least a part of the second items associated with the first application. The second electronic device 120 may display the fourth screen in the second display.

The operations described with reference to the illustrative example of FIG. 8 may be performed at the electronic device 111 of FIG. 3. In this case, the respective operations may be performed at a processor (e.g., the processor 114 of FIG. 3). For example, transmitting information between the first electronic device 110 and the second electronic device 120 may, for example, be implemented as an information transfer between processors or may be understood as an operation of generating information in one processor.

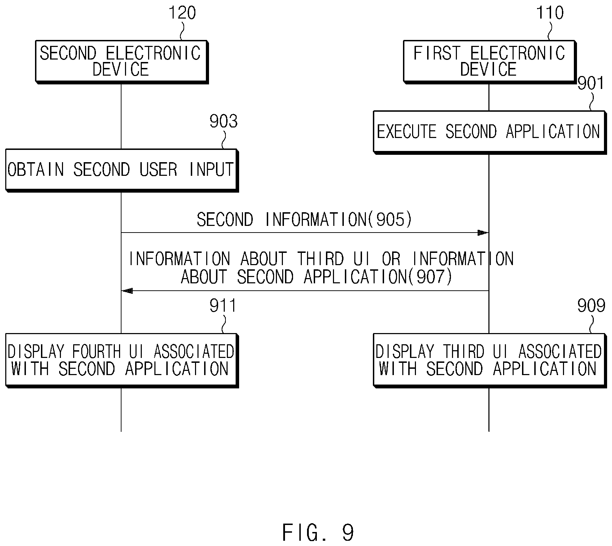

FIG. 9 illustrates, in flowchart format, operations between a first electronic device and a second electronic device according to various embodiments.

Referring to the non-limiting example of FIG. 9, the first electronic device 110 may determine an UI based on an application. In other words, a different UI may be used according to an application.

Below, the first electronic device 110 may be the first electronic device 110 of FIG. 2, and the second electronic device 120 may be the second electronic device 120 of FIG. 2. An operation of the first electronic device 110 and/or an operation of the second electronic device 120 may be understood as being executed by a processor (e.g., the processor 114 of FIG. 2 or the processor 124 of FIG. 2).

As used to describe the illustrative example of FIG. 9, first information, a first application, a first UI, or a second UI may be identical or similar to the first information, the first application, the first UI, or the second UI of FIG. 7. According to certain embodiments, operations 901 to 911 of FIG. 9 may be performed after operations 701 to 711 in FIG. 7.

In operation 901, the first electronic device 110 may execute a second application. The second application may be an application which is different from the first application. The first electronic device 110 may execute the second application in response to a user input. The user input may be a user input through a first display (e.g., the first display 112 of FIG. 2). The first electronic device 110 may display the second application in the first display.

In operation 903, the second electronic device 120 may obtain a second user input. The second electronic device 120 may obtain the second user input through a second display (e.g., the second display 122 of FIG. 2). The second user input may be, for example, a touch input.

In operation 905, the second electronic device 120 may transmit the second information to the first electronic device 110 in response to the second user input. The second information which is information providing notification that the second user input is obtained may be information about the second user input.

In operation 907, the first electronic device 110 may transmit information about the third UI or information about the second application to the second electronic device 120. The first electronic device 110 may determine the third UI associated with the second application in response to the second information. The first electronic device 110 may transmit the information about the third UI or the information about the second application to the second electronic device 120.

In operation 909, the first electronic device 110 may display the third UI associated with the second application on the first display 112. The first electronic device 110 may display the third UI on the first application in response to obtaining the second information. To display the third UI may be understood as displaying the third screen including at least a part of fourth items associated with the first application in the first display. The third UI may be a control UI which allows the user to control the second application. The third UI may include an item, at least a portion of which is different from that of the second UI of FIG. 7.

In operation 911, the second electronic device 120 may display the fourth UI associated with the second application in the second display in response to obtaining the information in operation 907. To display the fourth UI may be understood as displaying the fourth screen including an item including at least a part of fifth items associated with the second application in the second display. The fourth UI may be associated with the third UI. The at least a part of the fifth items may operatively or functionally correlate with or correspond to the at least a part of the fourth items.

The second electronic device 120 may determine the fourth UI based on information about the third UI or information about the second application. To this end, a correlation between the third UI and the fourth UI or a correlation between the second application and the fourth UI may be stored in advance in the second electronic device 120. The information about the third UI may directly indicate the fourth UI. For example, the first electronic device 110 may determine the fourth UI to be displayed at the second electronic device 120, and may inform the second electronic device 120 of the fourth UI through the information about the third UI.

The fourth UI may be a control UI for controlling the second application or an operation of the first electronic device 110. The fourth UI may provide the user with a guide for the control.

The operations described with reference to FIG. 9 may, in certain embodiments, be performed at the electronic device 111 of FIG. 3. In this case, the respective operations may be performed at a processor (e.g., the processor 114 of FIG. 3).

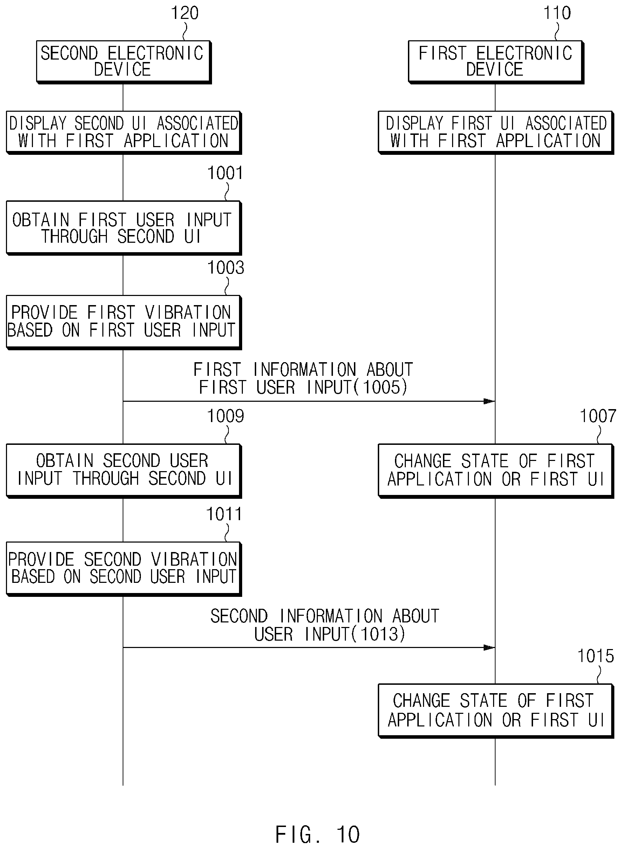

FIG. 10 illustrates, in flowchart format, operations between a first electronic device and a second electronic device according to some embodiments.

Referring to the non-limiting example of FIG. 10, the second electronic device 120 may provide a haptic notification for a user input, so as to make user's "blind" (for example, by allowing a user to interact with a display without necessarily having to look at the display) control possible. For example, the second electronic device 120 may provide the user with a vibration of a specified intensity and/or a specified pattern through the second display. The vibration may have an intensity and/or pattern specified according to an object, a location, an intensity, a moving distance, and/or a moving direction of the touch input.

Below, the first electronic device 110 may be the first electronic device 110 of FIG. 2, and the second electronic device 120 may be the second electronic device 120 of FIG. 2. An operation of the first electronic device 110 and/or an operation of the second electronic device 120 may be understood as being executed by a processor (e.g., the processor 114 of FIG. 2 or the processor 124 of FIG. 2).

Depending on operation 709 to operation 711 of FIG. 7, the first UI in FIG. 10 may be displayed in a first display (e.g., the first display 112 of FIG. 2) of the first electronic device, and the second UI may be displayed in a second display (e.g., the second display 122 of FIG. 2).

In operation 1001, the second electronic device 120 may obtain a first user input through the second UI. The second UI may include at least a part of second items associated with the first application. The first user input may be obtained through a third item of the at least a part of the second items.

In operation 1003, the second electronic device 120 may provide a first vibration based on the first user input. The second electronic device 120 may provide the first vibration through the second display. According to certain embodiments, the first vibration may have a first intensity and/or a first pattern. According to various embodiments, the first intensity and/or the first pattern may be determined based on the first user input. For example, the first intensity and/or the first pattern may be determined based on an object (e.g., the third item), a location, an intensity, a moving distance, and/or a moving direction of the first user input.

In the case where the first user input is completed, in operation 1005, the second electronic device 120 may transmit first information about the first user input to the first electronic device 110. The first information may include, for example, a command associated with the third item.

In operation 1007, the first electronic device 110 may change a state of the first UI or the first application in response to the first information. The first electronic device 110 may perform an operation corresponding to the command, and may display a result of performing the operation in a screen of the first UI or may display the result on the first application or the first UI. According to some embodiments, a state of the fourth item corresponding to the third item of the second UI may change on the first UI.

In operation 1009, the second electronic device 120 may obtain a second user input through the second UI. The second UI may include at least a part of the second items associated with the first application. The second user input may be obtained through a fifth item of the at least a part of the second items.

In operation 1011, the second electronic device 120 may provide a second vibration based on the second user input. The second electronic device 120 may provide the second vibration through the second display. According to certain embodiments, the second vibration may have a second intensity and/or a second pattern. According to various embodiments, the second intensity and/or the second pattern may be determined based on the second user input. For example, the second intensity and/or the second pattern may be determined based on an object (e.g., the fifth item), a location, an intensity, a movement distance, and/or a movement direction of the second user input. The second intensity and/or the second pattern may be different in value from the first intensity and/or the first pattern.

In the case where the second user input is completed, in operation 1013, the second electronic device 120 may transmit second information about the second user input to the first electronic device 110. The second information may include, for example, a command associated with the fifth item.

In operation 1015, the first electronic device 110 may change a state of the first UI or the first application in response to the second information. The first electronic device 110 may perform an operation corresponding to the command, and may display a result of performing the operation in a screen of the first UI or may display the result on the first application or the first UI. According to some embodiments, a state of a sixth item corresponding to the fifth item of the second UI may change on the first UI.

FIG. 10 provides an illustrative example of a different vibration is provided according to a user input, but the vibration may vary with a kind of an UI or application. For example, the intensity and/or pattern of the vibration may change for each UI, or the intensity and/or pattern of the vibration may change for each application. In the case where UIs are different even though a user input is made at the same location, the intensity and/or pattern of the vibration may change. Alternatively, in the case where applications are different even though a user input is made at the same location, the intensity and/or pattern of the vibration may change.

The operations described with reference to FIG. 10 may, in some embodiments, be performed at the electronic device 111 of FIG. 3. In this case, the respective operations may be performed at a processor (e.g., the processor 114 of FIG. 3).

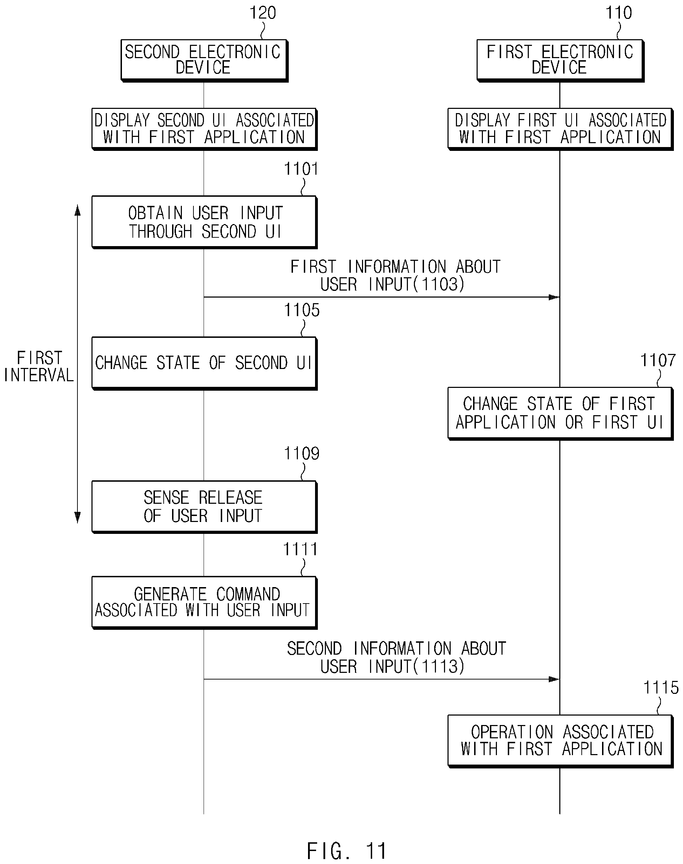

FIG. 11 illustrates, in flowchart format, operations between a first electronic device and a second electronic device according to certain embodiments.

Referring to the non-limiting example of FIG. 11, the second electronic device 120 may provide a haptic notification for a user input to make user's blind, or "no look" control possible. The user may check whether his/her own input corresponds to an intended input point, through the haptic notification, and may release the input from the second display when the input corresponds to the intended input point. To this end, the second electronic device 120 may provide the vibration while the user input is maintained, and may transmit the second information about the user input to the first electronic device 110 when the user input is released from the second display.

Below, the first electronic device 110 may be the first electronic device 110 of FIG. 2, and the second electronic device 120 may be the second electronic device 120 of FIG. 2. An operation of the first electronic device 110 and/or an operation of the second electronic device 120 may be understood as being executed by a processor (e.g., the processor 114 of FIG. 2 or the processor 124 of FIG. 2).

In FIG. 11, depending on operation 709 to operation 711 of FIG. 7, the first UI may be displayed in the first display (e.g., the first display 112 of FIG. 2) of the first electronic device, and the second UI may be displayed in the second display (e.g., the second display 122 of FIG. 2).

In operation 1101, the second electronic device 120 may obtain a user input through the second UI. Here, it may be assumed that the user input is maintained during a first interval.

In response to obtaining the user input, in operation 1103, the second electronic device 120 may transmit first information about the user input to the first electronic device 110. The second electronic device 120 may transmit the first information about the user input to the first electronic device 110 periodically or randomly.

In operation 1105, the second electronic device 120 may change a state of the second UI in response to the user input. The second electronic device 120 may display information in the second UI in response to the user input or may change a state of the second UI based on the user input. For example, in the case where the user input moves from a first point to a second point on the second UI, the second electronic device 120 may move an item corresponding to the first point of the second UI to the second point.

In operation 1107, the first electronic device 110 may change a state of the first UI or the first application in response to the first information about the user input while the user input is maintained. For example, in the case where the user input moves from the first point to the second point on the first UI, the first information may include information about movement from the first point to the second point on the first UI. In response to the information about the movement, the first electronic device 110 may display information corresponding to the movement in the first display or may change a state of the first UI or the first application so as to correspond to the movement.

Operations 1103 to 1107 may be performed during at least the first interval. Operations 1103 to 1107 may be performed at the same time or in various sequences.

In operation 1109, the second electronic device 120 may sense a release of the user input. The second electronic device 120 may sense the release of the touch input by the user in the second display. Here, an end of the first interval may correspond to a time at which the touch input is released. The second electronic device 120 may recognize the release of the user input as exact intension of the user. For example, in the case of increasing a volume, a volume corresponding to a time at which the user input is released may be recognized as a volume which the user intends.

In operation 1111, the second electronic device 120 may generate a command associated with the user input in response to sensing the release of the input. The command associated with the user input may be associated with the user input corresponding to a time at which the user input is released.

In operation 1113, the second electronic device 120 may transmit second information about the user input to the first electronic device 110. The second information may include the command generated in operation 1111.

In operation 1115, the first electronic device 110 may execute an operation associated with the first application in response to the second information. For example, the first electronic device 110 may execute an operation corresponding to the command and may display a result of the execution in the first display. The first electronic device 110 may display the result on the first application or on the first UI.

The operations described with reference to FIG. 11 may, in some embodiments, be performed at the electronic device 111 of FIG. 3. In this case, the respective operations may be performed at a processor (e.g., the processor 114 of FIG. 3).

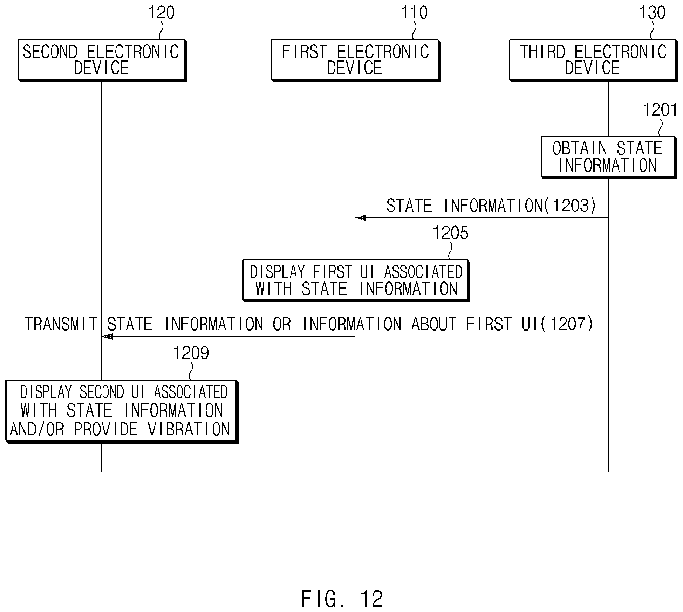

FIG. 12 illustrates, in flowchart format, operations between a first electronic device and a second electronic device according to various embodiments.

Referring to the non-limiting example of FIG. 12, when the first electronic device 110 or the second electronic device 120 obtains state information about a user, the first electronic device 110 or the second electronic device 120 may provide a notification to the user through a first display (e.g., the first display 112 of FIG. 2) or a second display (e.g., the second display 122 of FIG. 2). For these operations, the first electronic device 110 or the second electronic device 120 may pre-store or pre-calculate an UI and/or vibration (e.g., an intensity and/or pattern) associated for each state information.

In operation 1201, the third electronic device 130 may obtain state information about the user. To this end, the third electronic device 130 may include a sensor (e.g., the sensor 132 of FIG. 2) or a communication circuit (e.g., the communication circuit 136 of FIG. 2). The state information about the user may include state information obtained based on biometric information of the user or state information about a situation in which the user is, and the information about the situation may be obtained from an external device of the third electronic device 130. The state information may indicate, for example, whether the user is drowsy, whether a vehicle of the user crosses over the centerline or passes along a rough ground, or the like.

In operation 1203, the third electronic device 130 may transmit the state information to the first electronic device 110. The third electronic device 130 may also transmit the state information to the second electronic device 120.

In operation 1205, the first electronic device 110 may display the first UI associated with the state information. The first electronic device 110 may determine the first UI to be displayed based on the state information. A correlation between the first UI and the state information may be stored in advance in the first electronic device 110.

According to some embodiments, an UI to be displayed with regard to the state information may change for each application. For example, the first electronic device 110 may display any one UI while the first application is executed and may display another UI while the second application is executed.

Alternatively, the state information may not be associated with an application. In the case where specific information of the state information is obtained, the first electronic device 110 may display an UI associated with the state information regardless of the application.

In operation 1207, the first electronic device 110 may transmit the state information or information about the first UI to the second electronic device 120. In operation 1209, the second electronic device 120 may determine the second UI to be displayed at the second electronic device 120 or a vibration based on the state information or the information about the first UI. In some cases, the second electronic device 120 may obtain the state information directly from the third electronic device 130 and may determine the second UI or the vibration.

The second UI may be associated with the first UI. For example, a notification which the second UI indicates may express information which is identical or similar to a notification which the first UI indicates.

According to certain embodiments, operation 1201 to operation 1211 may be performed while the first electronic device 110 executes the first application. In this case, the first UI may be displayed on an execution screen of the first application.

According to various embodiments, operation 1201 to operation 1211 may be performed in a state where UIs associated with the first application are already displayed in the first display and the second display. In this case, the first UI and the second UI may be displayed on the UIs.

The operations described with reference to FIG. 12 may, in some embodiments, be performed at the electronic device 111 of FIG. 3. In this case, the respective operations may be performed at a processor (e.g., the processor 114 of FIG. 3).

According to some embodiments, pieces of information may be generated at the same time. For example, state information about the user may be obtained while the first application is executed, and a user input for the first application may be obtained within the same or similar interval.

According to certain embodiments, the first electronic device 110 may have a priority for each type of information about the user. For example, state information about the user may have precedence over input information of the user. In the state information about the user, a priority may vary with the degree of emergency. When the first electronic device 110 obtains input information of the user and state information about the user within a given time interval, the first electronic device 110 may determine the UI based on the state information about the user and may display the UI in a display (e.g., the first display and/or the second display). Alternatively, a priority may vary with an application type. For example, a call application may have precedence over a media application.

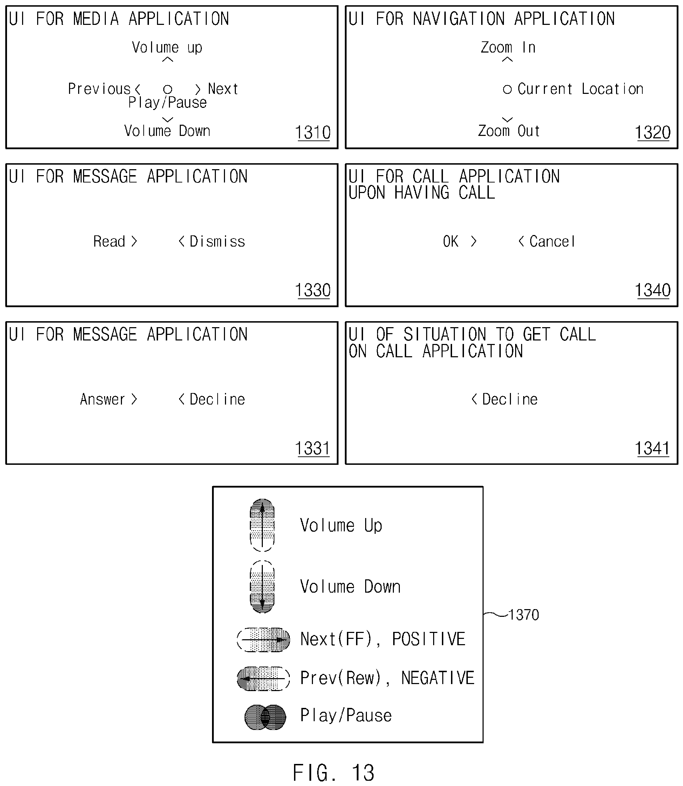

FIG. 13 illustrates various UIs defined for respective applications according to various embodiments.

A first screen 1310, a second screen 1320, a third screen 1330, or a fourth screen 1340 of FIG. 13 indicates an UI defined for each application. The first screen 1310 displays an UI associated with a media application, the second screen 1320 displays (or includes) an UI associated with a navigation application, a third screen 1330 displays an UI associated with a message application, and the fourth screen 1340 displays an UI associated with a call application. The UIs may be displayed in a second display (e.g., the second display 122 of FIG. 2).

For example, in the case where a user input is made through the second display while executing the media application at the first electronic device 110 (e.g., the first electronic device 110 of FIG. 2), the first electronic device 110 may transmit information about the media application to the second electronic device 120 (e.g., the second electronic device 120 of FIG. 2), and the second electronic device 120 may display the first screen 1310 through the second display.

According to some embodiments, the first screen 1310 may include items for controlling the media application. For example, in the case where the media application is a music player application, the items may indicate an item "Volume Up" increasing a volume, an item "Volume Down" decreasing the volume, an item "Previous" indicating a playback of previous music, an item "Next" indicating a playback of next music, and/or an item "Play/Pause" indicating paly/pause. Auser may control an operation of the media application, which is executed at the first electronic device 110, through the items.

In the case where the user executes the navigation application while executing a first application or the call application is executed in response to an incoming call, an UI associated with the navigation application or an UI associated with the call application may be displayed in a second display, in response to a user input obtained through the second display. The respective UIs may be different in at least a part of items. For example, the UI associated with the navigation application may include an item "Zoom In" indicating enlargement, an item "Zoom Out" indicating reduction, or an item "Current Location" indicating a display of a current location, and the UI associated with the call application may include an item "OK" indicating a response or an item "Cancel" indicating a cancellation.

Different UIs may be displayed according to state information about the user even while the same application is executed. For example, the third screen 1330 indicates an UI displayed in the second display in a state where the message application is executed as a message is received, and a fifth screen 1331 indicates an UI displayed in the second display in the case of reading the message while the message application is executed.

The third screen 1330 may include an item "Read" indicating to read a message or an item "Dismiss" indicating a dismissal. The fifth screen 1331 may include an item "Answer" indicating an answer or an item "Decline" indicating a user declining to take a call.

For another example, the fourth screen 1340 indicates an UI displayed in the second display in a state where the call application is executed based on an incoming call, and a sixth screen 1341 indicates an UI displayed in the second display while the call application is executed.

The fourth screen 1340 may include an item "OK" indicating to receive a call or an item "Cancel" indicating a cancellation. The sixth screen 1341 may include an item "Decline" indicating to ring off in a state where a call is received.

Even in the case of an item obtaining an indication of the same gesture, the meaning of the gesture may be differently used depending on the UI.

Referring to a motion definition 1370 included in FIG. 13, a gesture moving a touch in a left direction may indicate "Previous" or "Deny". As such, even though the same gesture is received, a different command may be generated according to an UI.

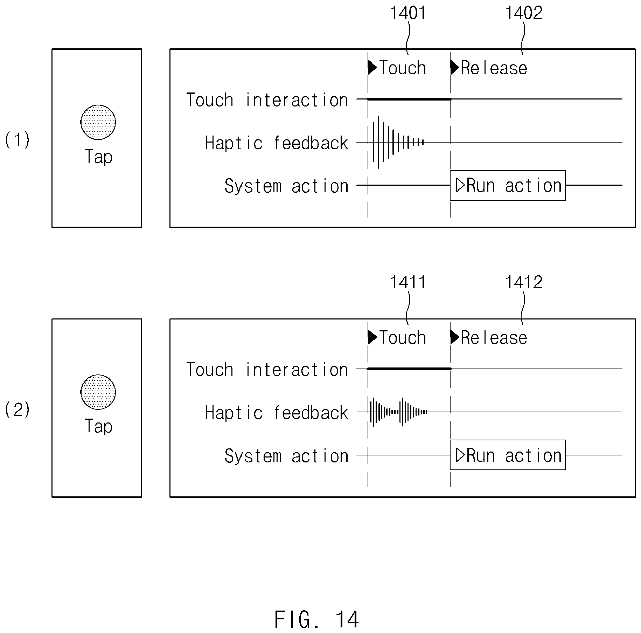

FIG. 14 illustrates examples of vibratory feedback and a system action corresponding to a user input in a system environment in which a plurality of displays are included, according to certain embodiments.

A user input may be made through an UI displayed in a second display (e.g., the second display 122 of FIG. 2) in a system environment (e.g., the system environment 1000 of FIG. 2) including a plurality of displays.

In the non-limiting example of FIG. 14, graphic (1) may indicate an input to a first item (e.g., an item indicating affirmation) and vibratory feedback (or a haptic feedback) and a system action corresponding to the input, and graphic (2) may indicate an input to a second item (e.g., an item indicating denial) and vibratory feedback and a system action corresponding to the input. Here, the vibration feedback may be a feedback which is provided to a user through the second display. The system action may be an operation of a first electronic device (e.g., the first electronic device 110 of FIG. 2) and/or a second electronic device (e.g., the second electronic device 120 of FIG. 2).

Referring to graphic (1) of FIG. 14, in the case where the input to the first item is made, the vibration feedback may have a first vibration pattern and a first intensity (corresponding to a length and/or a thickness of a line of the vibration feedback). In the case where the input is maintained during a first interval 1401 and then is released, the vibration feedback may be provided in the first interval 1401, and the system action may be performed in a second interval 1402.

Referring to graphic (2) of FIG. 14, in the case where an input to a second item is made, the vibration feedback may have a second vibration pattern and a second intensity. The second vibration pattern may be different from the first vibration pattern, and the second intensity may be different from the first intensity. In the case where the input is maintained during a third interval 1411 and then is released, the vibration feedback may be provided in the third interval 1411, and the system action may be performed in a fourth interval 1412. The fourth interval 1412 may be a time interval after the third interval 1411.

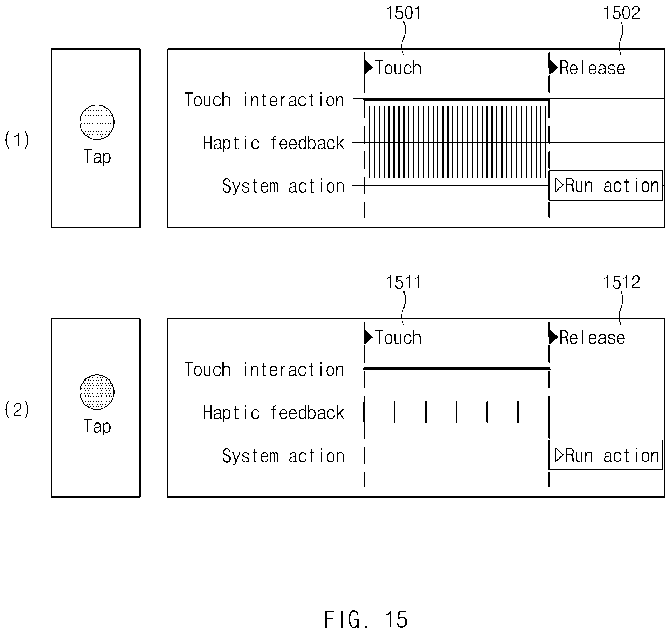

FIG. 15 illustrates examples of vibratory feedback and a system action corresponding to a user input in a system environment in which a plurality of displays are included, according to various embodiments.

Vibratory feedback may be provided upon obtaining state information about a user in a system environment (e.g., the system environment 1000 of FIG. 2) including a plurality of displays. For example, the state information about the user may be state information about an external environment associated with the user.

In the non-limiting example of FIG. 15, graphic (1) may illustrate a first state associated with the user (e.g., SOS: an emergency situation such as detection of emergency) and vibratory feedback (or a haptic feedback) and a system action corresponding to the first state, and graphic (2) may illustrate the case where a second state associated with the user does not exist (e.g., a normal situation or the case where an additional operation does exist after a given time). Here, the vibratory feedback may be a feedback which is provided to the user through the second display. The system action may be an operation of a first electronic device (e.g., the first electronic device 110 of FIG. 2) and/or a second electronic device (e.g., the second electronic device 120 of FIG. 2).

Referring to graphic (1) of FIG. 15, in the case where the first state is obtained, the vibration feedback may have a first vibration pattern and a first intensity (corresponding to a thickness of a line of the vibratory feedback). In the case where a touch input of the user is maintained during a first interval 1501 and then is released, the vibratory feedback may be provided in the first interval 1501, and the system action may be performed in a second interval 1502. The system action may be, for example, an operation associated with an application previously performed in the first interval 1501. The operation associated with the application may not be performed when the vibratory feedback is provided during the first interval 1501. A sound associated with the feedback or the first state may be provided together when the vibratory feedback is provided during the first interval 1501. The first vibration pattern and the first intensity may vary with the level of emergency of the first state. Alternatively, the first interval 1501 may be an interval where the first state is maintained, and the second interval 1502 may be an interval where the first state ends.

Referring to graphic (2) of FIG. 15, in the second state, the vibratory feedback may have a second vibration pattern and a second intensity. The second vibration pattern may be different from the first vibration pattern, and the second intensity may be different from the first intensity. The vibratory feedback may not have any pattern and intensity. In other words, in the case of a situation which is not an emergency situation, a vibration may not be generated even in the first interval 1511 where a touch input of the user is maintained. In the first interval 1511, an additional interaction may not be made with regard to an application.

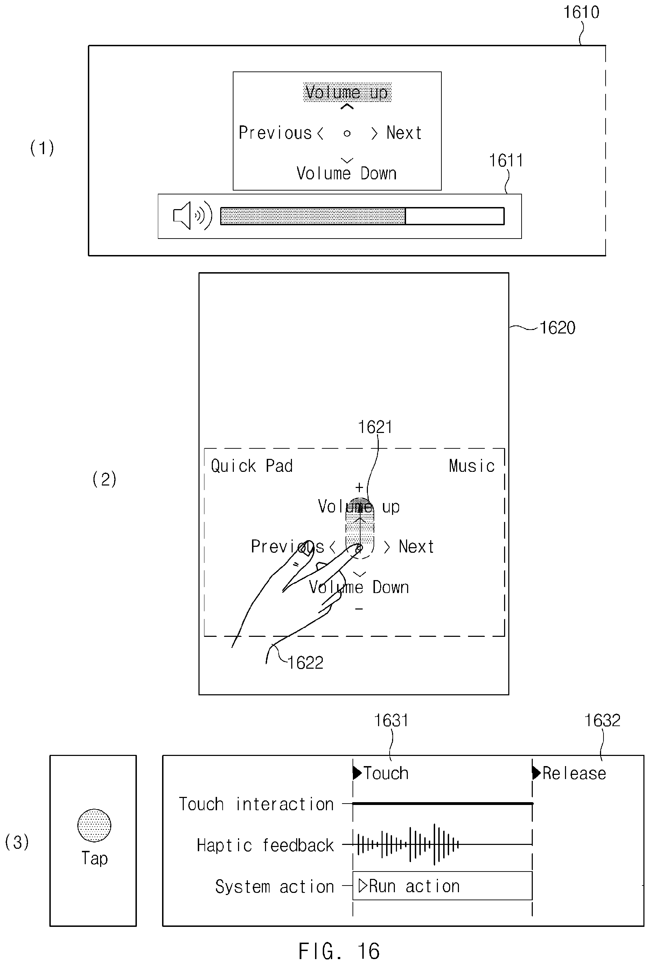

FIG. 16 illustrates an example of interaction in a first display and a second display based on a user input, according to some embodiments.

Referring to the non-limiting example of FIG. 16, graphic (1) indicates a first screen 1610 including a first UI associated with a specific application (e.g., a media application) which is displayed in a first display (e.g., the first display 112 of FIG. 2), and graphic (2) indicates a second screen 1610 including a second UI associated with the specific application which is displayed in a second display (e.g., the second display 112 of FIG. 2). Graphic (3) indicates a user input provided through the second display, and vibratory feedback and a system action corresponding to the input.

In the case where the user performs an input 1622 of a specific gesture on an item 1621 corresponding to "Volume Up" through a second screen 1620 (or the second UI) during a first interval 1631, vibratory feedback associated with the item 1621, the second UI, and/or the input 1622 may be provided in at least a portion of the first interval 1631. According to certain embodiments, the system action may be provided in at least a portion of the first interval 1631.

For example, in the case where the user provides the input 1622 having a gesture by pulling up the item 1621, while the input 1622 is performed, an operation corresponding to the input 1622 may be performed in an UI provided through the first screen 1610. For example, a state of the first screen 1610 may change with a user input such that a volume increases. Alternatively, a state of an item 1611 in the first screen 1610 corresponding to the item 1621 may change.

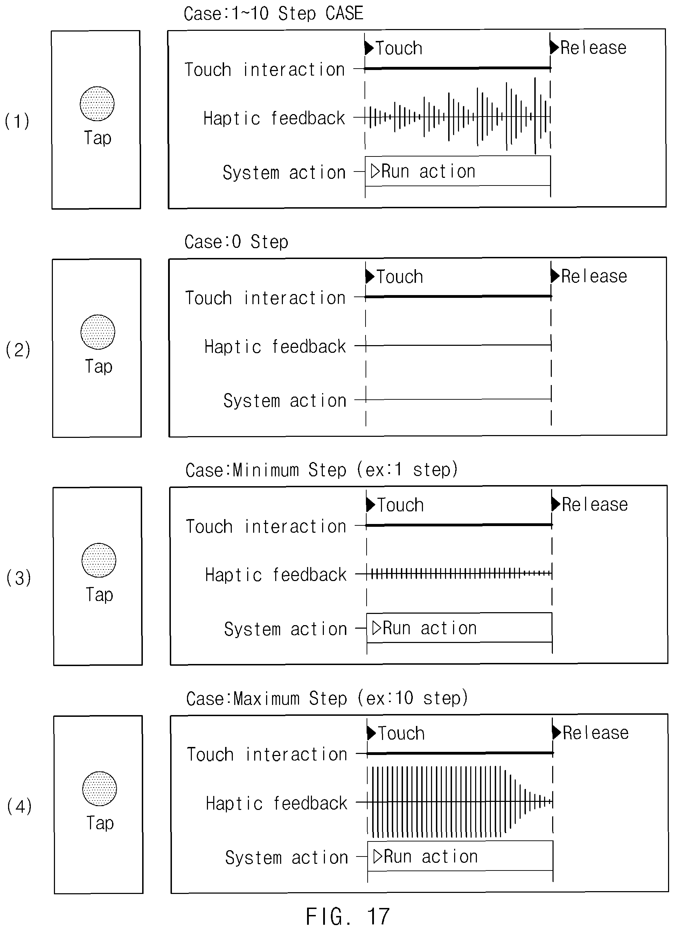

FIG. 17 illustrates interactions in a first display and a second display based on a user input, according to various embodiments.

Referring to the non-limiting example of FIG. 17, an UI for controlling a level value for the purpose of controlling an application (e.g., a media application, an air conditioner control application, a speed control application, or the like) having a level control function may be provided in a first display (e.g., the first display 112 of FIG. 2) and/or a second display (e.g., the second display 122 of FIG. 2).

In FIG. 17, each of graphics (1) to (4) illustrates a user input provided through the second display, and vibratory feedback and a system action corresponding to the input. The user input may be made through an UI having a level value.

Referring to graphic (1) of FIG. 17, in the case where a level associated with an application increases as an input of a user moves, the magnitude of the vibration feedback may increase as the user input moves. Upon using an UI having a level control function, while a user input is performed, an operation corresponding to the user input may be executed at a first electronic device (e.g., the electronic device 110 of FIG. 2).

Referring to graphic (2) of FIG. 17, in the case where an input obtained through a second UI corresponds to a minimum level "0 Step", the magnitude of the vibration feedback may be low or "0". In other words, the vibration feedback may not be provided through the second display.

Referring to graphics (3) and (4) of FIG. 17, in the case where the input obtained through the second UI corresponds to a minimum level "1 Step" having a magnitude, the input obtained through the second UI may have a vibration intensity of a small magnitude compared with the case where the input obtained through the second UI corresponds to a maximum level "10 Step".

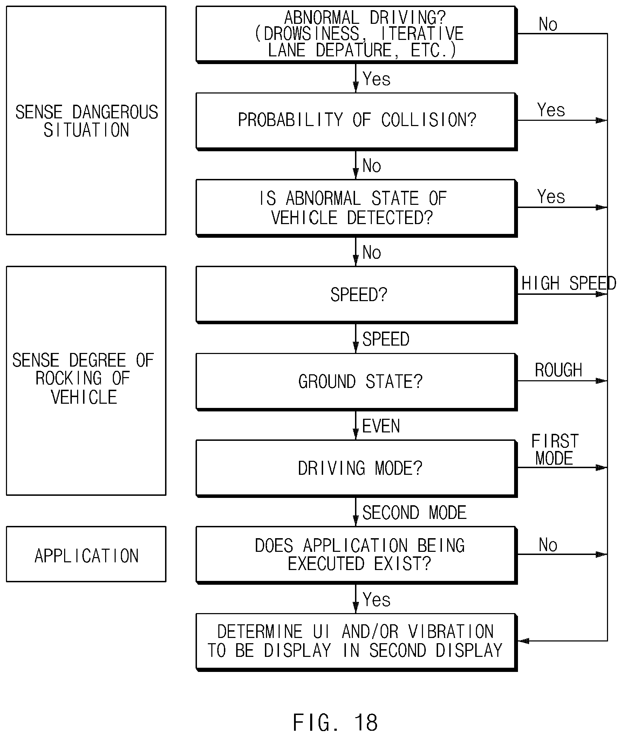

FIG. 18 illustrates examples of vibratory feedback which an electronic device according to some embodiments provides in consideration of a priority.

According to various embodiments, an electronic device (e.g., the first electronic device 110 of FIG. 2, the second electronic device 120 of FIG. 2, or the electronic device 111 of FIG. 3) may set a priority ofvibratory feedback for each obtained information. Below, a description will be given under assumption that a vehicle is running.

Referring to the non-limiting example of FIG. 18, the electronic device may provide vibratory feedback in the order of information notifying a dangerous situation, information notifying the degree of rocking of the vehicle, input information about a user, or information about an application being executed.

Priorities may be variously set with regard to respective situations.

For example, the electronic device may determine whether the user drives normally; in the case where it is determined that the user does not drive normally, the electronic device may determine an UI and a vibration associated with the case and may provide the UI and the vibration through the second display.

In the case where it is determined that the user drives normally, the electronic device may determine whether the probability of dangerous collision with a surrounding vehicle and/or obstacle exists. For example, the electronic device may determine the probability of dangerous collision by using an advanced driver assistance systems (ADAS) sensor. In the case where the probability of dangerous collision exists, the electronic device may determine an UI and a vibration associated with the corresponding situation and may provide the determined UI and vibration through the second display.

In the case where the probability of a dangerous collision does not exist, the electronic device may determine whether an abnormal state (e.g., a tire state, an energy state, or the like) of the vehicle is detected. Likewise, the electronic device may sequentially determine a speed, a ground state, a driving mode, whether an application being executed exists, or the like. For example, in the case where an application being executed exists, the electronic device may display an UI and a vibration associated with the application; in the case where an application being executed does not exist, the electronic device may display a separate UI and a separate vibration or may not display an UI and/or a vibration.

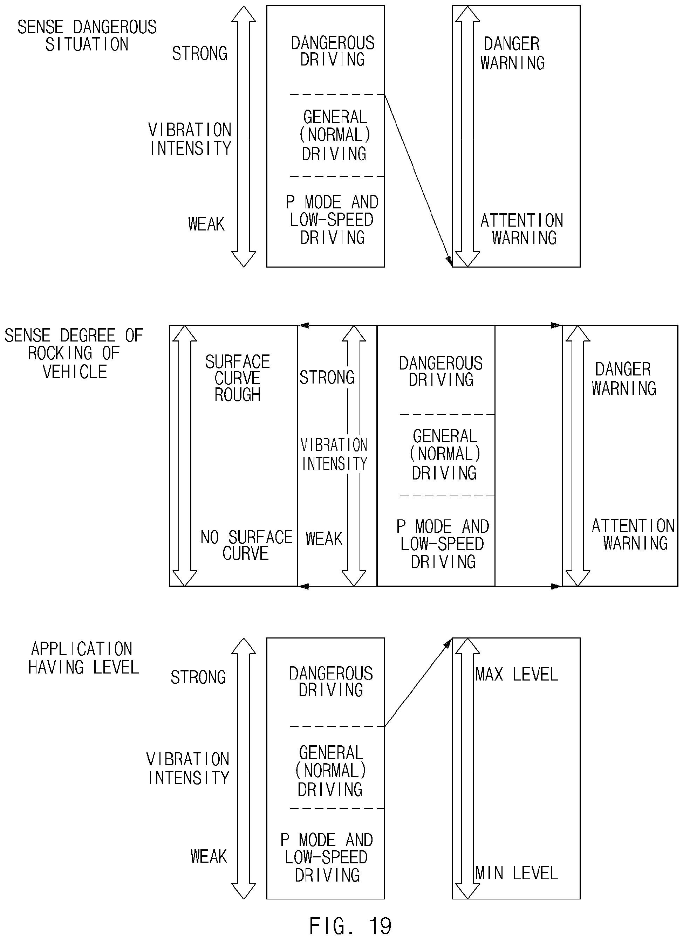

FIG. 19 illustrates intensities of vibratory feedback for various situations according to certain embodiments.

Referring to the non-limiting example of FIG. 19, vibratory feedback device according to various embodiments may be differently set according to a situation. For example, as a dangerous level of a situation increases, an intensity of a vibration may increase. Alternatively, in the case of an application having a level value, the intensity of the vibration may change for each level, and the intensity of the vibration may become greater as the level becomes higher.

For example, in the case where it is determined as dangerous driving, the intensity of the vibration may become greater as the dangerous level becomes higher. The intensity of the vibration upon warning attention may be small compared with the case where the dangerous level is high.

The intensity of the vibration may vary with a ground state. The intensity of the vibration may become greater as a surface curve becomes greater; the intensity of the vibration may become smaller as the surface curve becomes smaller. Also, the intensity of the vibration may vary with a driving state even under the condition of the same surface curve. For example, the intensity of the vibration may increase in the case where the surface curve is rough in a dangerous driving state. In a P mode driving or low-speed driving state, the vibration, the intensity of which is smaller than in the dangerous driving state, may be provided even though the surface curve is rough.

While an application having a level is executed, the vibration, the intensity of which becomes greater as the level becomes higher may be provided. In some cases, the vibration may not be provided even though the level increases. For example, since a notification associated with a danger takes precedence in a dangerous state, the vibration associated with the application may not be provided. In this case, a vibration associated with a dangerous state may be provided depending on a priority.

According to embodiments of the present disclosure, the user may easily control an application or the like through an additional display without using a main display. The user may be provided with information about various situations through vibratory feedback, without checking the main display or without visually checking the additional display controlling the main display.

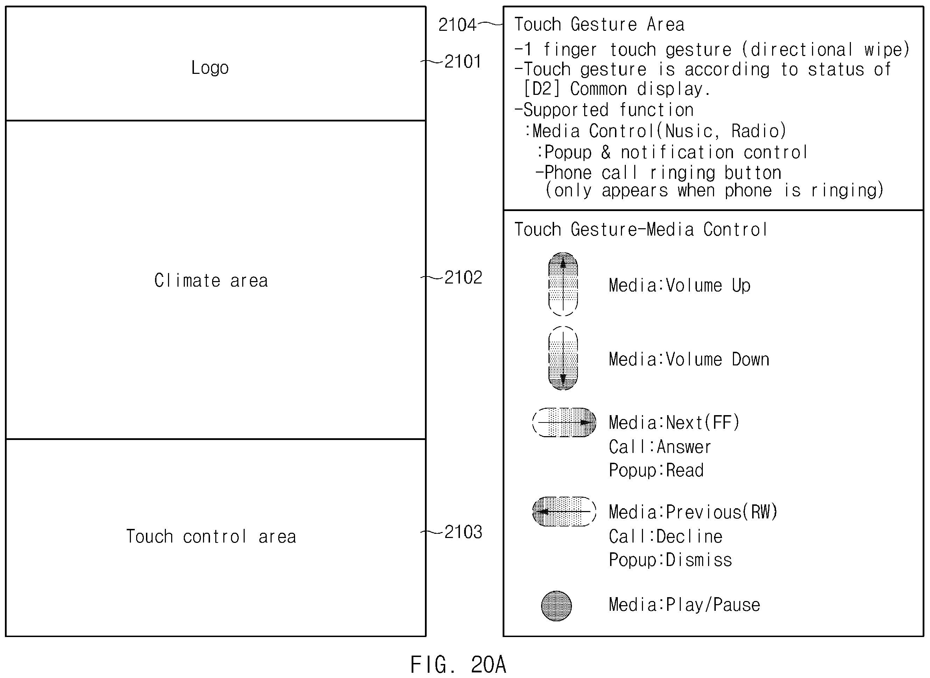

FIG. 20A illustrates a display according to various embodiments.

According to some embodiments, a display 2100 (e.g., the display 112 of FIG. 1 or the display 122 of FIG. 2) may be divided into various areas. The display 2100 may include a logo area 2101, a climate area 2102, and a touch control area 2103. A user input may be obtained through the touch control area 2103. Various UIs disclosed in the specification may be displayed through the touch control area 2103.

An electronic device (e.g., the first electronic device 110 or the second electronic device 120 of FIG. 2) may provide a user with a guide through the touch control area 2103. The user may input a touch gesture through the touch control area 2103. A finger touch gesture of the user may be obtained through the touch gesture area. A touch gesture is illustrated in FIG. 20A as an example.

The touch gesture may include an act of pulling up, an act of pulling down, an act of swiping to the left, an act of swiping to the right, and a tap act. According to certain embodiments, the act of pulling up may correspond to a volume-up operation of the electronic device. The act of pulling down may correspond to a volume-down operation of the electronic device. The act of swiping to the right may correspond to an operation of playing next music (or an operation of taking a call or an operation of reading on a popup window). The act of swiping to the left may correspond to an operation of playing previous music (or an operation of denying a call or a release or denial operation on a popup window). The tap act may correspond to a play/pause operation.

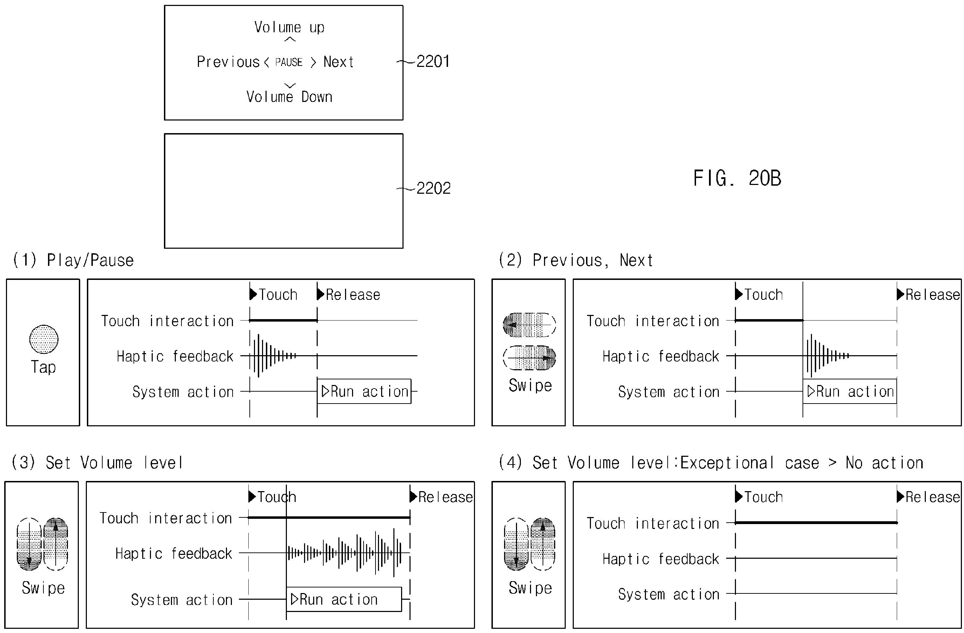

FIG. 20B illustrates an input acquisition guide of a user and vibratory feedback interaction according to various embodiments.

Referring to the non-limiting example of FIG. 20B, a touch guide for a user may be provided in a display of an electronic device (e.g., the first electronic device 110 of FIG. 2 or the second electronic device 120 of FIG. 2). A first screen 2201 of FIG. 20B indicates an UI corresponding to the case where the touch guide is turned on, and the UI indicates an UI for a media-related application. In FIG. 20B, a user finger touch gesture and an operation corresponding to the finger touch gesture may refer to the description given with reference to FIG. 20A.

A second screen 2202 of FIG. 20B indicates an UI corresponding to the case where the touch guide is turned off.

In FIG. 20B, each of graphics (1) to (4) shows a user input through the first screen 2201 and vibratory feedback operation corresponding to the user input, as an example.

In the case where the user performs a tap act, graphic (1) of FIG. 20B indicates a first vibration feedback corresponding to the tap act. In this case, when the user releases the tap act through a display, an electronic device (e.g., the first electronic device 110 of FIG. 2) may perform a play or pause operation.

In the case where the user performs an act of swiping to the left or an act of swiping to the right, graphic (2) of FIG. 20B indicates a second vibration feedback corresponding to the act. The second vibration feedback may be differently defined with regard to the act of swiping to the left or the act of swiping to the right. While the act of swiping to the left or the act of swiping to the right is performed, the electronic device may display or play next music (or previous music) corresponding to the act. After the end of the act of swiping to the left or the act of swiping to the right, the electronic device may perform the corresponding act.

In the case where the user performs an act of pulling down (or swiping down) or an act of pulling up (or swiping up), graphic (3) of FIG. 20B indicates a third vibration feedback corresponding to the corresponding act. The third vibration feedback may be differently defined with regard to the respective acts. While the user performs the act, vibratory feedback may vary with a moving distance and/or a moving direction of the act. For example, the intensity of the third vibration feedback may change. While the act of the user is performed, the electronic device may perform an operation corresponding to the act of the user. For example, while the user performs the act of pulling up, the magnitude of the third vibration feedback may increase, and the electronic device may perform an operation of increasing a volume.

Graphic (4) of FIG. 20B corresponds to an exceptional case; even though the user performs the same act as graphic (3) of FIG. 20B, vibratory feedback may not be provided, and the electronic device may not perform any operation.

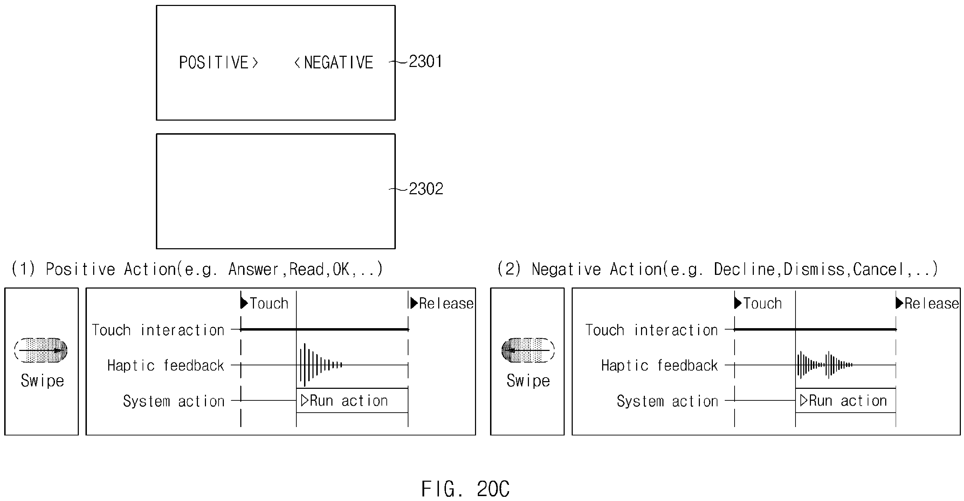

FIG. 20C illustrates an example of an input acquisition guide of a user and vibratory feedback interaction according to some embodiments.

Referring to the non-limiting example of FIG. 20C, a touch guide for a user may be provided in a display of an electronic device (e.g., the first electronic device 110 of FIG. 2 or the second electronic device 120 of FIG. 2). The first screen 2201 of FIG. 20C indicates an UI corresponding to the case where the touch guide is turned on, and the UI indicates an UI for a media-related application. A second screen 2301 of FIG. 20C indicates an UI corresponding to the case where the touch guide is turned off. In FIG. 20C, a user finger touch gesture and an operation corresponding to the finger touch gesture may refer to the description given with reference to FIG. 20A.

According to certain embodiments, an act of swiping to the right may correspond to a positive response, and an act of swiping to the left may correspond to a negative response. The positive response may correspond to, for example, a user intension such as answer, yes, or reading. The negative response may correspond to, for example, a user intension such as denial, no, or release.

In FIG. 20C, each of graphics (1) and (2) shows a user input through the first screen 2201 and vibratory feedback operation corresponding to the user input as an example.

Referring to graphic (1) of FIG. 20C, in the case where a user performs an act of swiping to the right, a display (e.g., the second display 122 of FIG. 2) may provide a first vibration feedback so as to correspond to the act of swiping to the right. An electronic device (e.g., the first electronic device 110 of FIG. 2) may perform an operation associated with the act of swiping to the right while the first vibration feedback is provided. For example, a notification associated with the act of swiping to the right may be displayed in a display (e.g., the display 112 of FIG. 1), or an operation associated with the act of swiping to the right may be immediately performed.

Referring to graphic (2) of FIG. 20C, in the case where the user performs an act of swiping to the left, a display (e.g., the second display 122 of FIG. 2) may provide a second vibration feedback so as to correspond to the act of swiping to the left. An electronic device (e.g., the first electronic device 110 of FIG. 2) may perform an operation associated with the act of swiping to the left while the second vibration feedback is provided. For example, a notification associated with the act of swiping to the left may be displayed in a display (e.g., the display 112 of FIG. 1), or an operation associated with the act of swiping to the left may be immediately performed.

According to various embodiments, an electronic device may include at least one processor, a first display connected to the at least one processor, a second display physically separated from the first display, and a memory that is connected to the at least one processor and stores instructions and a plurality of applications including a first application and a second application different from the first application. The instructions, when executed, may cause the processor to obtain first information through the second display while displaying a first screen associated with the first application through the first display in response to executing the first application, and to display a first user interface (UI) being at least a part of a plurality of items associated with the first application in the second display, in response to obtaining the first information.

According to some embodiments, instructions, when executed, may cause the processor to obtain second information through the second display while displaying a second screen associated with the second application in the first display, and to display a second UI being at least a part of a plurality of items associated with the second application in the second display, in response to obtaining the second information.

According to certain embodiments, the instructions, when executed, cause the processor to obtain third information different from the first information through the second display while displaying the first screen in the first display, and to display a third UI, which is at least apart of a plurality of items associated with the first application and is different from the first UI, in the second display in response to obtaining the third information.

According to various embodiments, the instructions, when executed, may cause the processor to obtain a user input to the first UI, and to execute an operation associated with the first application corresponding to the obtained user input.

According to some embodiments, the instructions, when executed, may cause the processor to change the first screen corresponding to the first application in response to obtaining the user input.

According to certain embodiments, the electronic device may further include a motor that provides a vibration having a specified intensity and a specified pattern.

According to various embodiments, the first UI may include a plurality of first items, and the instructions, when executed, may cause the processor to obtain a user input through a second item of the plurality of first items, and to provide a first vibration associated with the second item by using the motor, in response to the user input.

According to some embodiments, the instructions, when executed, may cause the processor to obtain a user input through a third item different from the second item among the plurality of first items, and to provide a second vibration associated with the third item by using the motor, in response to the user input. The second vibration is different from the first vibration in at least one of an intensity or a pattern.

According to certain embodiments, the first information may correspond to a touch input of a user.

According to various embodiments, the instructions, when executed, may cause the processor to display a fourth UI associated with the first UI in the first display in response to obtaining the first information.

According to some embodiments, the instructions, when executed, may cause the processor to obtain state information not associated with the first application while executing the first application, and to display a fifth UI associated with the state information on the first UI or on the second display in response to obtaining the state information.

According to certain embodiments, the instructions, when executed, may cause the processor to provide a vibration associated with the state information through the second display in response to obtaining the state information.

According to various embodiments, an electronic device may include at least one processor, a display connected to the at least one processor, a communication circuit that is connected to the at least one processor and transmits or receive a signal to or from an external device, and a memory that is connected to the at least one processor and stores instructions. The instructions, when executed, may cause the processor to obtain a user input through the display, to transmit information about the user input to the external device, and to obtain information about a response user interface (UI) from the external device in response to information about the user input, and to display an UI including at least one item associated with a first application being executed at the external device in the display by using information about the UI.

According to some embodiments, the instructions, when executed, may cause the processor to obtain a user input through the UI, and to transmit control information about the user input to the external device when the user input is obtained.

According to certain embodiments, the electronic device may further include a motor that provides a vibration having a specified intensity and a specified pattern. The instructions, when executed, may cause the processor to obtain the user input through a first item of a plurality of items included in the UI during a first time interval, and to provide a first vibration associated with the first item within the first time interval by using the motor.

According to various embodiments, the instructions, when executed, may cause the processor to obtain the user input through a second item different from the first item among the plurality of items during a second time interval, and to provide a second vibration associated with the second item within the second time interval, and the first vibration and the second vibration are different from each other in at least one of an intensity or a pattern.

According to some embodiments, information about the UI may include information about the first application. The instructions, when executed, may cause the processor to determine a first UI associated with the first application by using information about the received first application, and to display the determined first UI in the display.

According to certain embodiments, an electronic device may include at least one processor, a display connected to the at least one processor, a communication circuit connected to the at least one processor and configured to transmit or receive a signal to or from an external device, and a memory that is connected to the at least one processor and stores instructions and a plurality of applications including a first application and a second application different from the first application. The instructions, when executed, may cause the processor to display a first user interface (UI) associated with the first application in the display in response to executing the first application, to obtain information corresponding to a user input from the external device while executing the first application, and to transmit information about the first application to the external device in response to information corresponding to the user input, to allow the external device to display a second UI associated with the first application at the external device.

According to various embodiments, the instructions, when executed, may cause the processor to determine the second UI based on a first application being executed at the electronic device and a state of a user, when information corresponding to the user input is obtained, and information about the first application may include information of the second UI.

According to some embodiments, the state of the user may include an emergency state and a non-emergency state.

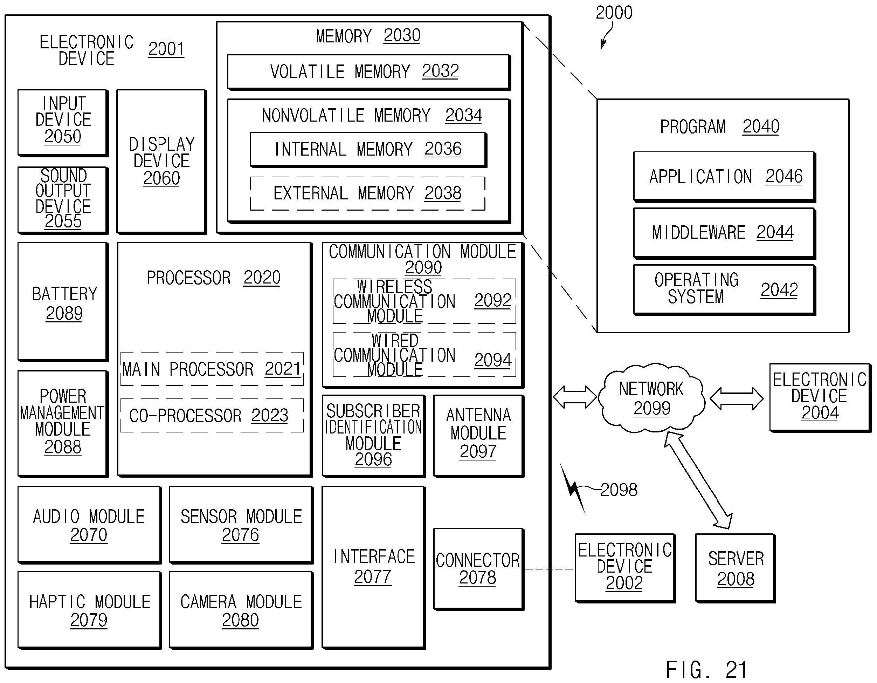

FIG. 21 is a block diagram illustrating an electronic device 2001 in a network environment 2000 according to various embodiments. Referring to FIG. 21, the electronic device 2001 in the network environment 2000 may communicate with an electronic device 2002 via a first network 2098 (e.g., a short-range wireless communication network), or an electronic device 2004 or a server 2008 via a second network 2099 (e.g., a long-range wireless communication network). According to an embodiment, the electronic device 2001 may communicate with the electronic device 2004 via the server 2008. According to an embodiment, the electronic device 2001 may include a processor 2020, memory 2030, an input device 2050, a sound output device 2055, a display device 2060, an audio module 2070, a sensor module 2076, an interface 2077, a haptic module 2079, a camera module 2080, a power management module 2088, a battery 2089, a communication module 2090, a subscriber identification module (SIM) 2096, or an antenna module 2097. In some embodiments, at least one (e.g., the display device 2060 or the camera module 2080) of the components may be omitted from the electronic device 2001, or one or more other components may be added in the electronic device 2001. In some embodiments, some of the components may be implemented as single integrated circuitry. For example, the sensor module 2076 (e.g., a fingerprint sensor, an iris sensor, or an illuminance sensor) may be implemented as embedded in the display device 2060 (e.g., a display).

The processor 2020 may execute, for example, software (e.g., a program 2040) to control at least one other component (e.g., a hardware or software component) of the electronic device 2001 coupled with the processor 2020, and may perform various data processing or computation. According to one embodiment, as at least part of the data processing or computation, the processor 2020 may load a command or data received from another component (e.g., the sensor module 2076 or the communication module 2090) in volatile memory 2032, process the command or the data stored in the volatile memory 2032, and store resulting data in non-volatile memory 2034. According to an embodiment, the processor 2020 may include a main processor 2021 (e.g., a central processing unit (CPU) or an application processor (AP)), and an auxiliary processor 2023 (e.g., a graphics processing unit (GPU), an image signal processor (ISP), a sensor hub processor, or a communication processor (CP)) that is operable independently from, or in conjunction with, the main processor 2021. Additionally or alternatively, the auxiliary processor 2023 may be adapted to consume less power than the main processor 2021, or to be specific to a specified function. The auxiliary processor 2023 may be implemented as separate from, or as part of the main processor 2021.

The auxiliary processor 2023 may control at least some of functions or states related to at least one component (e.g., the display device 2060, the sensor module 2076, or the communication module 2090) among the components of the electronic device 2001, instead of the main processor 2021 while the main processor 2021 is in an inactive (e.g., sleep) state, or together with the main processor 2021 while the main processor 2021 is in an active state (e.g., executing an application). According to an embodiment, the auxiliary processor 2023 (e.g., an image signal processor or a communication processor) may be implemented as part of another component (e.g., the camera module 2080 or the communication module 2090) functionally related to the auxiliary processor 2023.

The memory 2030 may store various data used by at least one component (e.g., the processor 2020 or the sensor module 2076) of the electronic device 2001. The various data may include, for example, software (e.g., the program 2040) and input data or output data for a command related thererto. The memory 2030 may include the volatile memory 2032 or the non-volatile memory 2034.

The program 2040 may be stored in the memory 2030 as software, and may include, for example, an operating system (OS) 2042, middleware 2044, or an application 2046.

The input device 2050 may receive a command or data to be used by other component (e.g., the processor 2020) of the electronic device 2001, from the outside (e.g., a user) of the electronic device 2001. The input device 2050 may include, for example, a microphone, a mouse, or a keyboard.

The sound output device 2055 may output sound signals to the outside of the electronic device 2001. The sound output device 2055 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 2060 may visually provide information to the outside (e.g., a user) of the electronic device 2001. The display device 2060 may include, for example, a display, a hologram device, or a projector and control circuitry to control a corresponding one of the display, hologram device, and projector. According to an embodiment, the display device 2060 may include touch circuitry adapted to detect a touch, or sensor circuitry (e.g., a pressure sensor) adapted to measure the intensity of force incurred by the touch.

The audio module 2070 may convert a sound into an electrical signal and vice versa. According to an embodiment, the audio module 2070 may obtain the sound via the input device 2050, or output the sound via the sound output device 2055 or a headphone of an external electronic device (e.g., an electronic device 2002) directly (e.g., wiredly) or wirelessly coupled with the electronic device 2001.

The sensor module 2076 may detect an operational state (e.g., power or temperature) of the electronic device 2001 or an environmental state (e.g., a state of a user) external to the electronic device 2001, and then generate an electrical signal or data value corresponding to the detected state. According to an embodiment, the sensor module 2076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2077 may support one or more specified protocols to be used for the electronic device 2001 to be coupled with the external electronic device (e.g., the electronic device 2002) directly (e.g., wiredly) or wirelessly. According to an embodiment, the interface 2077 may include, for example, a high definition multimedia interface (HDMI), a universal serial bus (USB) interface, a secure digital (SD) card interface, or an audio interface.

A connecting terminal 2078 may include a connector via which the electronic device 2001 may be physically connected with the external electronic device (e.g., the electronic device 2002). According to an embodiment, the connecting terminal 2078 may include, for example, a HDMI connector, a USB connector, a SD card connector, or an audio connector (e.g., a headphone connector),

The haptic module 2079 may convert an electrical signal into a mechanical stimulus (e.g., a vibration or a movement) or electrical stimulus which may be recognized by a user via his tactile sensation or kinesthetic sensation. According to an embodiment, the haptic module 2079 may include, for example, a motor, a piezoelectric element, or an electric stimulator.

The camera module 2080 may capture a still image or moving images. According to an embodiment, the camera module 2080 may include one or more lenses, image sensors, image signal processors, or flashes.

The power management module 2088 may manage power supplied to the electronic device 2001. According to one embodiment, the power management module 2088 may be implemented as at least part of, for example, a power management integrated circuit (PMIC).

The battery 2089 may supply power to at least one component of the electronic device 2001. According to an embodiment, the battery 2089 may include, for example, a primary cell which is not rechargeable, a secondary cell which is rechargeable, or a fuel cell.

The communication module 2090 may support establishing a direct (e.g., wired) communication channel or a wireless communication channel between the electronic device 2001 and the external electronic device (e.g., the electronic device 2002, the electronic device 2004, or the server 2008) and performing communication via the established communication channel. The communication module 2090 may include one or more communication processors that are operable independently from the processor 2020 (e.g., the application processor (AP)) and supports a direct (e.g., wired) communication or a wireless communication. According to an embodiment, the communication module 2090 may include a wireless communication module 2092 (e.g., a cellular communication module, a short-range wireless communication module, or a global navigation satellite system (GNSS) communication module) or a wired communication module 2094 (e.g., a local area network (LAN) communication module or a power line communication (PLC) module). A corresponding one of these communication modules may communicate with the external electronic device via the first network 2098 (e.g., a short-range communication network, such as Bluetooth ™, wireless-fidelity (Wi-Fi) direct, or infrared data association (IrDA)) or the second network 2099 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2092 may identify and authenticate the electronic device 2001 in a communication network, such as the first network 2098 or the second network 2099, using subscriber information (e.g., international mobile subscriber identity (IMSI)) stored in the subscriber identification module 2096.

The antenna module 2097 may transmit or receive a signal or power to or from the outside (e.g., the external electronic device) of the electronic device 2001. According to an embodiment, the antenna module 2097 may include one or more antennas, and, therefrom, at least one antenna appropriate for a communication scheme used in the communication network, such as the first network 2098 or the second network 2099, may be selected, for example, by the communication module 2090 (e.g., the wireless communication module 2092). The signal or the power may then be transmitted or received between the communication module 2090 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2001 and the external electronic device 2004 via the server 2008 coupled with the second network 2099. Each of the electronic devices 2002 and 2004 may be a device of a same type as, or a different type, from the electronic device 2001. According to an embodiment, all or some of operations to be executed at the electronic device 2001 may be executed at one or more of the external electronic devices 2002, 2004, or 2008. For example, if the electronic device 2001 should perform a function or a service automatically, or in response to a request from a user or another device, the electronic device 2001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2001. The electronic device 2001 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2040) including one or more instructions that are stored in a storage medium (e.g., internal memory 2036 or external memory 2038) that is readable by a machine (e.g., the electronic device 2001) . For example, a processor (e.g., the processor 2020) of the machine (e.g., the electronic device 2001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store ™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Although the present disclosure has been described with various embodiments, various changes and modifications may be suggested to one skilled in the art. It is intended that the present disclosure encompass such changes and modifications as fall within the scope of the appended claims.

## Claims

1. An electronic device comprising:
at least one processor;
a first display connected to the at least one processor;
a second display physically separated from the first display; and
a memory connected to the at least one processor and configured to store instructions and a plurality of applications including a first application and a second application different from the first application,
wherein the instructions, when executed, cause the processor to:
obtain first information through the second display while displaying a first screen associated with the first application through the first display in response to executing the first application; and
display a first user interface (UI) being at least a part of a plurality of items associated with the first application in the second display, in response to obtaining the first information.

2. The electronic device of claim 1, wherein the instructions, when executed, cause the processor to:
obtain second information through the second display while displaying a second screen associated with the second application in the first display; and
display a second UI, the second UI comprising a part of a plurality of items associated with the second application in the second display, in response to obtaining the second information.

3. The electronic device of claim 1, wherein the instructions, when executed, cause the processor to:
obtain third information different from the first information through the second display while displaying the first screen in the first display; and
display a third UI, the third UI comprising a part of a plurality of items associated with the first application and is different from the first UI, in the second display in response to obtaining the third information.

4. The electronic device of claim 1, wherein the instructions, when executed, cause the processor to:
obtain a user input to the first UI; and
execute an operation associated with the first application corresponding to the obtained user input.

5. The electronic device of claim 4, wherein the instructions, when executed, cause the processor to:
change the first screen corresponding to the first application in response to obtaining the user input.

6. The electronic device of claim 1, further comprising:
a motor configured to provide a vibration having a specified intensity and a specified pattern.

7. The electronic device of claim 6, wherein the first UI includes a plurality of first items, and
wherein the instructions, when executed, cause the processor to:
obtain a user input through a second item of the plurality of first items; and
provide a first vibration associated with the second item by using the motor, in response to the user input.

8. The electronic device of claim 7, wherein the instructions, when executed, cause the processor to:
obtain a user input through a third item different from the second item among the plurality of first items; and
provide a second vibration associated with the third item by using the motor, in response to the user input, and
wherein the second vibration is different from the first vibration in at least one of an intensity or a pattern.

9. The electronic device of claim 1, wherein the first information corresponds to a touch input of a user.

10. The electronic device of claim 1, wherein the instructions, when executed, cause the processor to:
display a fourth UI associated with the first UI in the first display in response to obtaining the first information.

11. The electronic device of claim 1, wherein the instructions, when executed, cause the processor to:
obtain state information not associated with the first application while executing the first application; and
display a fifth UI associated with the state information on the first UI or on the second display in response to obtaining the state information.

12. The electronic device of claim 11, wherein the instructions, when executed, cause the processor to:
provide a vibration associated with the state information through the second display in response to obtaining the state information.

13. An electronic device comprising:
at least one processor;
a display connected to the at least one processor;
a communication circuit connected to the at least one processor and configured to transmit or receive a signal to or from an external device; and
a memory connected to the at least one processor and configured to store instructions,
wherein the instructions, when executed, cause the processor to:
obtain a user input through the display;
transmit information about the user input to the external device; and
obtain information about a response user interface (UI) from the external device in response to information about the user input; and
display a UI including at least one item associated with a first application being executed at the external device in the display by using information about the UI.

14. The electronic device of claim 13, wherein the instructions, when executed, cause the processor to:
obtain a user input through the UI; and
when the user input is obtained, transmit control information about the user input to the external device.

15. The electronic device of claim 14, further comprising:
a motor configured to provide a vibration having a specified intensity and a specified pattern.
wherein the instructions, when executed, cause the processor to:
obtain the user input through a first item of a plurality of items included in the UI during a first time interval; and
provide a first vibration associated with the first item within the first time interval by using the motor.
